# EUROPEAN PATENT APPLICATION

(11) **EP 4 394 498 A1**
(43) Date of publication of application: **03.07.2024**
(21) Application number: 22861040.8
(22) Date of filing: 26.07.2022
(51) Int. Cl.: G03B 21/06, F21S 2/00, H04N 5/222, F21Y 115/10

(54) **FILTER DEVICE**

(30) Priority: 26.08.2021 JP 2021138416
(71) Applicant: Panasonic Intellectual Property Management Co., Ltd., Kadoma-shi, Osaka 571-0057 (JP)
(72) Inventor: ABE, Hideaki, Kadoma-shi 571-0057 Osaka (JP); OKADA, Kenji, Kadoma-shi 571-0057 Osaka (JP)
(74) Representative: Appelt, Christian W.
(86) International application number: PCT/JP2022/028837
(87) International publication number: WO 2023/026749

(57) **Abstract**

A filter apparatus (1) is a filter apparatus (1) that transmits light emitted by a light source (a lighting apparatus (100)), and the filter apparatus (1) includes a simulated object (20) that receives the light emitted by the light source, a driving device (40) that mechanically moves the simulated object (20), and a first lens (31) that transmits the light emitted by the light source and having passed through the simulated object (20). The filter apparatus (1) projects, onto an illumination surface, a projection image of fluctuation of light and shadow formed by the light emitted by the light source and having passed through the simulated object (20) and the first lens (31).

## Description

### [Technical Field]

The present disclosure relates to a filter apparatus that can project a projection image onto an illumination surface.

### [Background Art]

Patent Literature (PTL) 1 discloses a lighting apparatus that includes a projector and an image controller therefor provided inside the lighting apparatus. The lighting apparatus is equipped with an image display function that, after a fluorescent lamp is turned off, projects an image onto an inner surface of a light transmissive globe that serves as a screen.

### [Citation List]

### [Patent Literature]

[PTL 1]
Japanese Unexamined Patent Application Publication No. 2006-127845

### [Summary of Invention]

### [Technical Problem]

However, since projectors are used in an environment where ambient light is dark, they can be used only in limited environments, or there may be cases in which projection images from projectors are not bright enough. Furthermore, projectors reproduce the same image repeatedly and have difficulty reproducing, for example, natural fluctuation of light and shadow, like the light filtering through tree leaves.

Accordingly, the present disclosure provides a filter apparatus that can be used in a bright environment and can project a bright projection image reproducing natural fluctuation of light and shadow.

### [Solution to Problem]

A filter apparatus according to one aspect of the present disclosure is a filter apparatus that transmits light emitted by a light source, and the filter apparatus includes: a simulated object that receives the light emitted by the light source; a driving device that mechanically moves the simulated object; and a first lens that transmits the light emitted by the light source and having passed through the simulated object, wherein the filter apparatus projects, onto an illumination surface, the light emitted by the light source and having passed through the simulated object and the first lens, the light forming an a projection image of fluctuation of light and shadow.

### [Advantageous Effects of Invention]

The filter apparatus according to the present disclosure can be used in a bright environment and can provide a bright projection image reproducing natural fluctuation of light and shadow.

### [Brief Description of Drawings]

[FIG. 1]

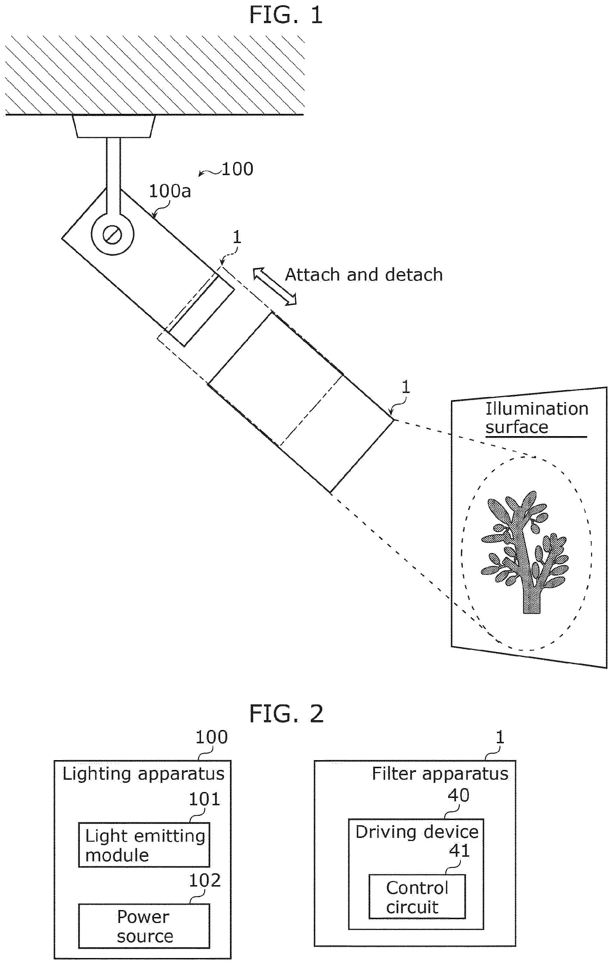

   FIG. 1 is a schematic diagram showing a filter apparatus and a lighting apparatus according to an embodiment.
[FIG. 2]
   FIG. 2 depicts block diagrams showing a filter apparatus and a lighting apparatus according to an embodiment.
[FIG. 3]

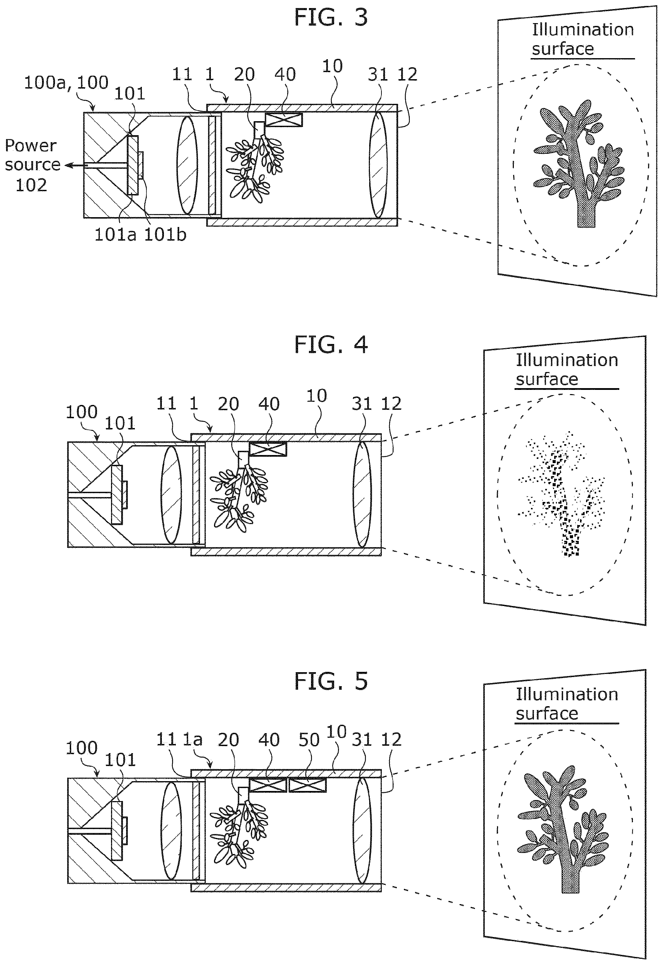

   FIG. 3 depicts a sectional view showing a filter apparatus and a lighting apparatus according to an embodiment as well as a diagram showing a projection image.
[FIG. 4]
   FIG. 4 depicts a sectional view showing a filter apparatus and a lighting apparatus according to an embodiment as well as a diagram showing a colored projection image.
[FIG. 5]
   FIG. 5 depicts a sectional view showing a filter apparatus and a lighting apparatus according to Variation 1 of an embodiment as well as a diagram showing a projection image.
[FIG. 6]

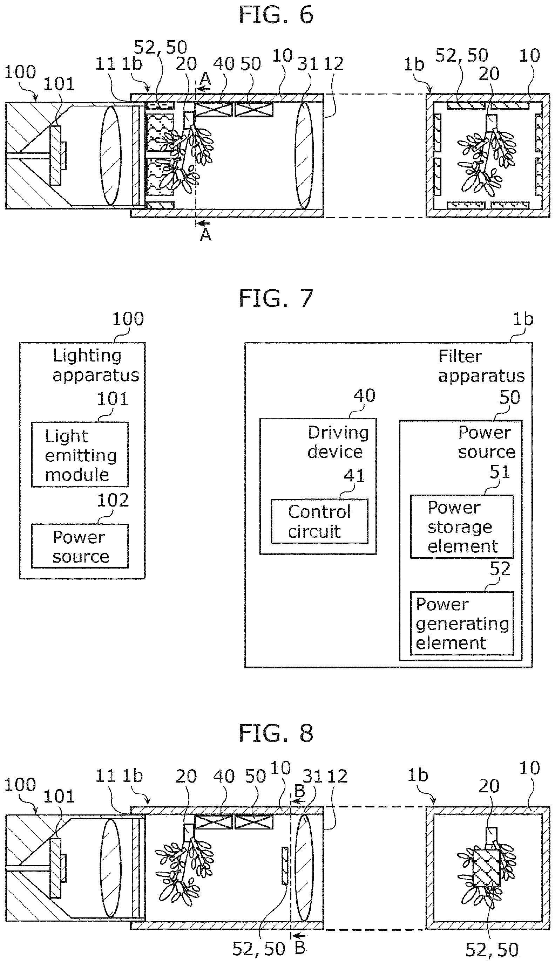

   FIG. 6 depicts a sectional view showing a filter apparatus and a lighting apparatus according to Variation 2 of an embodiment as well as a fragmentary sectional view, taken along the A-A line, showing a housing, a power generating element, and a simulated object of the filter apparatus.
[FIG. 7]
   FIG. 7 depicts block diagrams showing a filter apparatus and a lighting apparatus according to Variation 2 of an embodiment.
[FIG. 8]
   FIG. 8 depicts a sectional view showing a filter apparatus and a lighting apparatus according to Variation 2 of an embodiment as well as a fragmentary sectional view, taken along the B-B line, showing a housing, a power generating element, and a simulated object of the filter apparatus.
[FIG. 9]

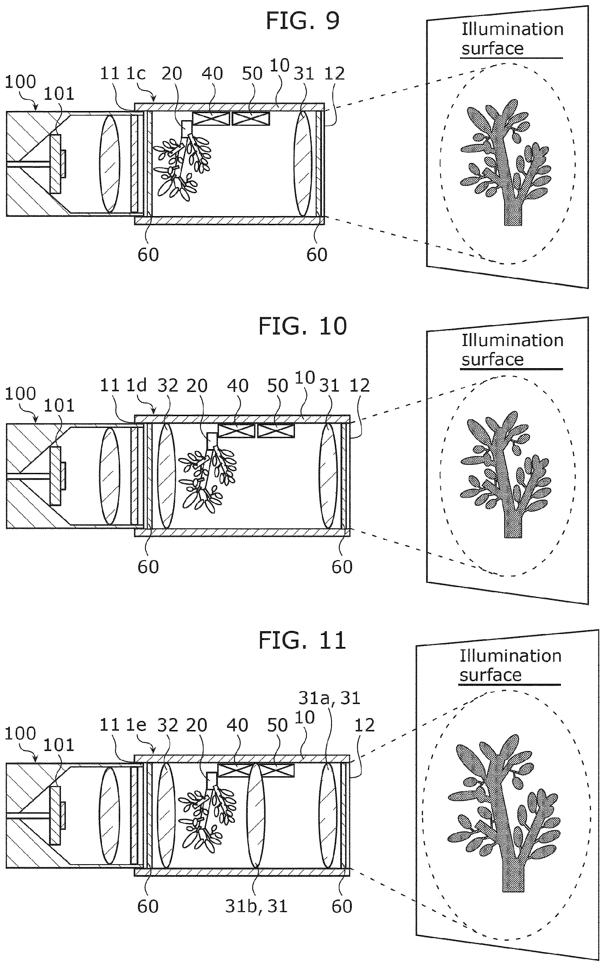

   FIG. 9 depicts a sectional view showing a filter apparatus and a lighting apparatus according to Variation 3 of an embodiment as well as a diagram showing a projection image.
[FIG. 10]
   FIG. 10 depicts a sectional view showing a filter apparatus and a lighting apparatus according to Variation 4 of an embodiment as well as a diagram showing a projection image.
[FIG. 11]
   FIG. 11 depicts a sectional view showing a filter apparatus and a lighting apparatus according to Variation 5 of an embodiment as well as a diagram showing a projection image.
[FIG. 12A]

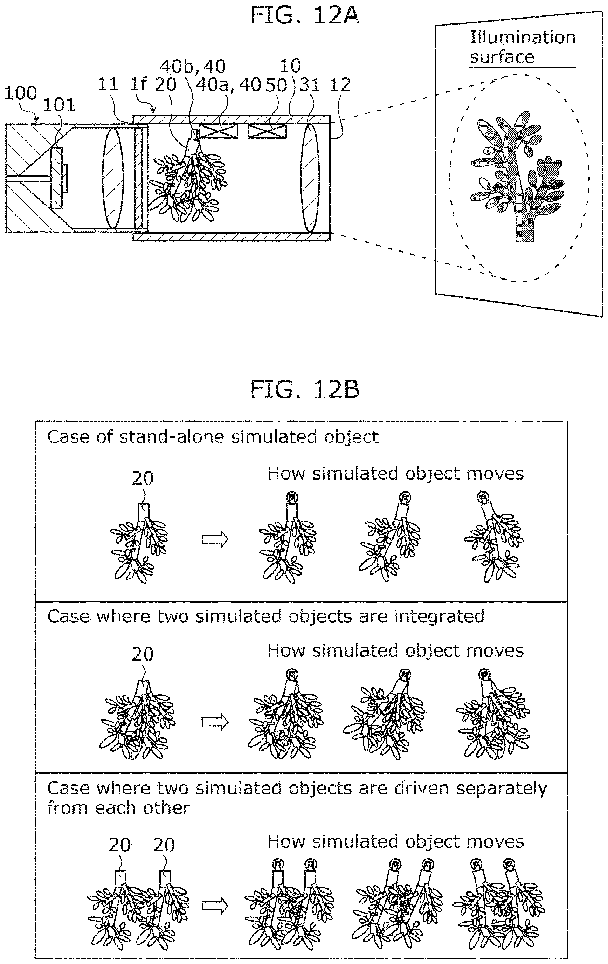

   FIG. 12A depicts a sectional view showing a filter apparatus and a lighting apparatus according to Variation 6 of an embodiment as well as a diagram showing a projection image.
[FIG. 12B]
   FIG. 12B is a diagram showing how a simulated object is moved in a filter apparatus according to Variation 6 of an embodiment.
[FIG. 13A]

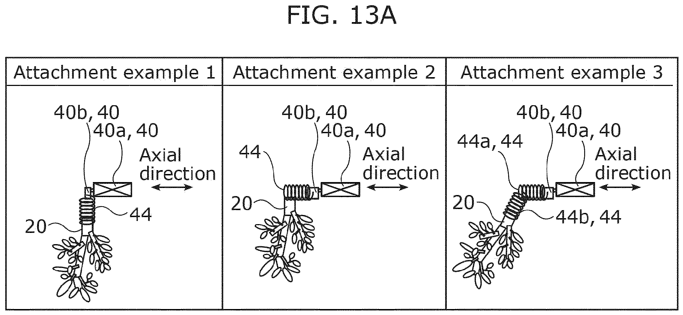

   FIG. 13A is a diagram showing cases in which a spring is disposed between a simulated object and a driving device of a filter apparatus according to Variation 6 of an embodiment.
[FIG. 13B]

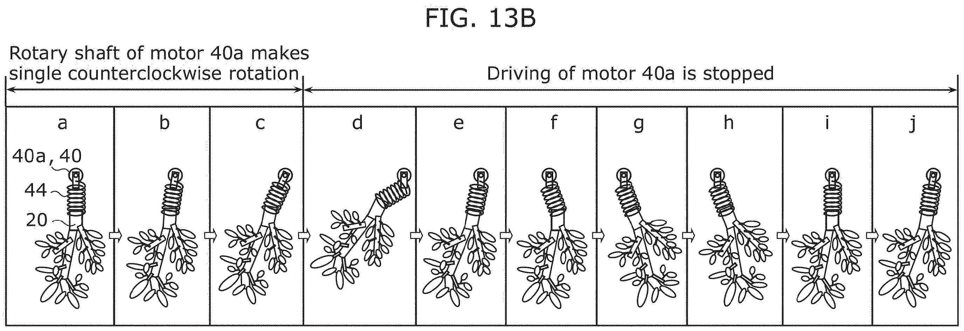

   FIG. 13B is a diagram showing a movement of a spring and a simulated object observed when a rotary shaft of a motor makes only a single clockwise rotation and then stops, in a configuration in which the spring is disposed between the simulated object and a driving device of a filter apparatus according to Variation 6 of an embodiment.
[FIG. 14]

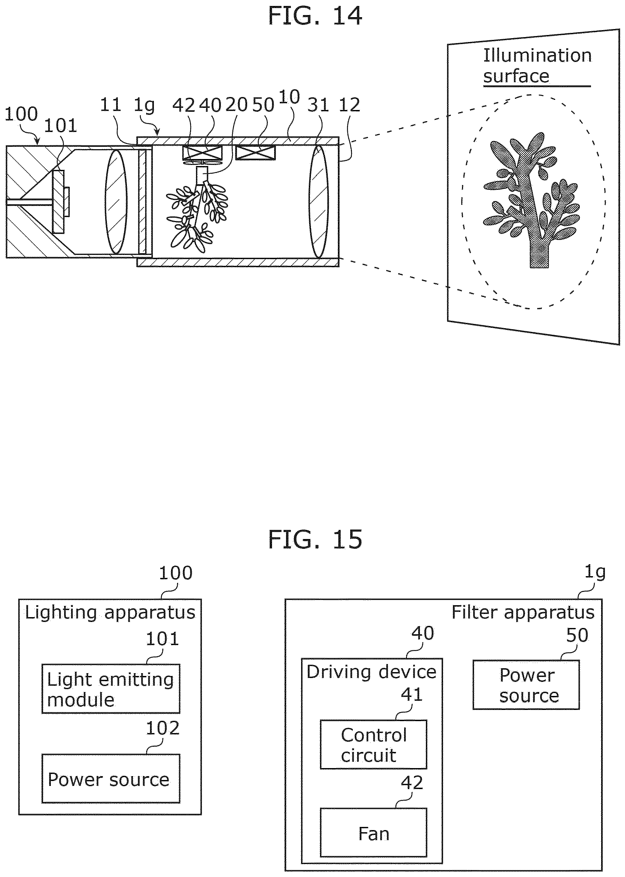

   FIG. 14 depicts a sectional view showing a filter apparatus and a lighting apparatus according to Variation 7 of an embodiment as well as a diagram showing a projection image.
[FIG. 15]
   FIG. 15 depicts block diagrams showing a filter apparatus and a lighting apparatus according to Variation 7 of an embodiment.
[FIG. 16]

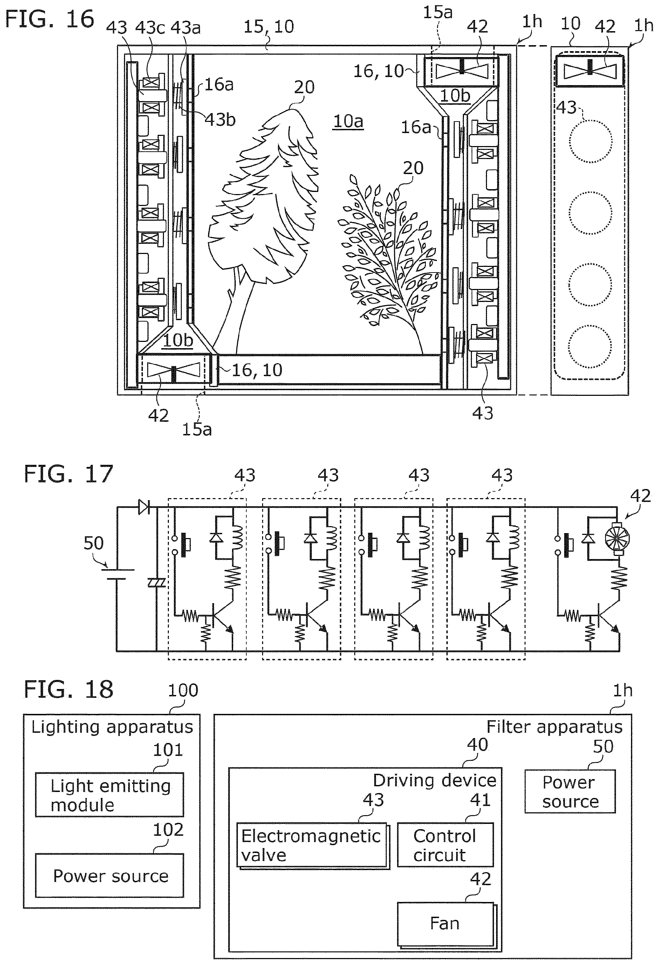

   FIG. 16 is a schematic diagram showing a filter apparatus according to Variation 8 of an embodiment.
[FIG. 17]
   FIG. 17 is a diagram showing a driving circuit of a filter apparatus according to Variation 8 of an embodiment.
[FIG. 18]
   FIG. 18 depicts block diagrams showing a filter apparatus and a lighting apparatus according to Variation 8 of an embodiment.
[FIG. 19]

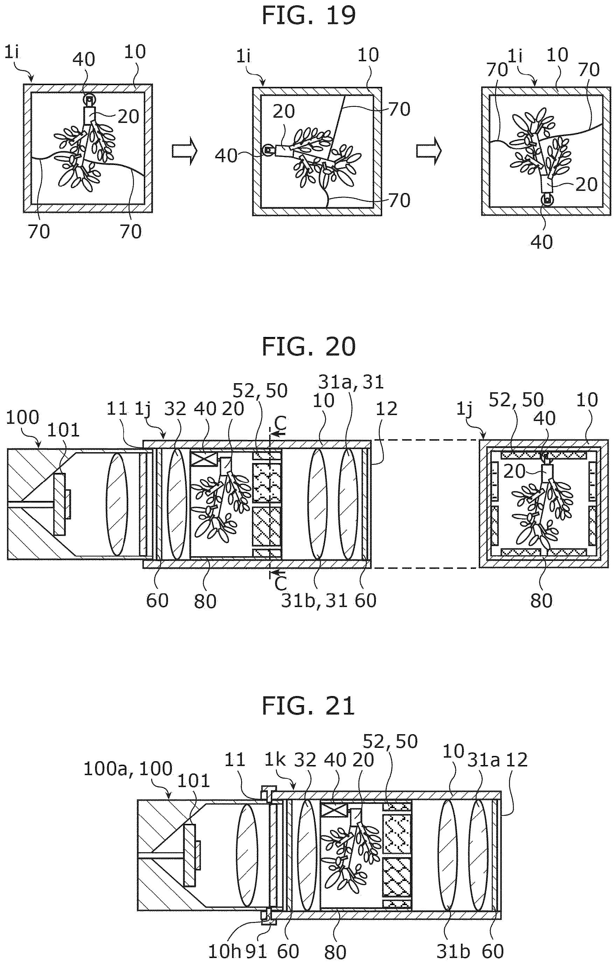

   FIG. 19 is a fragmentary sectional view showing a filter apparatus according to Variation 9 of an embodiment.
[FIG. 20]
   FIG. 20 depicts a sectional view showing a filter apparatus and a lighting apparatus according to Variation 10 of an embodiment as well as a fragmentary sectional view, taken along the C-C line, showing a housing, a power generating element, a simulated object, a housing body, and so on of the filter apparatus.
[FIG. 21]
   FIG. 21 is a schematic diagram showing a filter apparatus according to Variation 11 of an embodiment.
[FIG. 22]

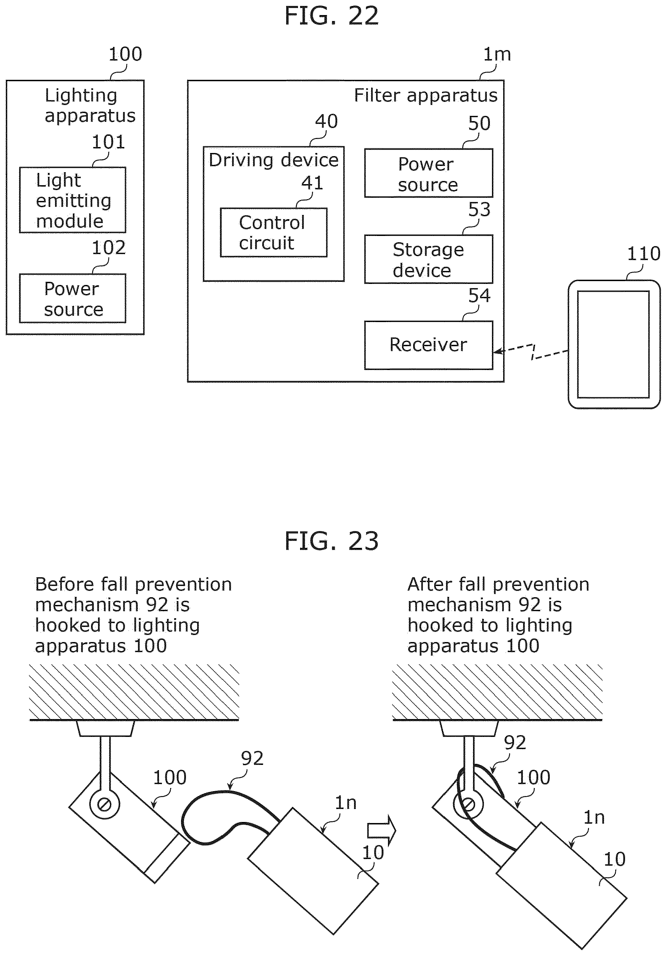

   FIG. 22 depicts block diagrams showing a filter apparatus and a lighting apparatus according to Variation 12 of an embodiment.
[FIG. 23]
   FIG. 23 depicts schematic diagrams of states before and after a fall prevention mechanism of a filter apparatus according to Variation 13 of an embodiment is hooked to a lighting apparatus.
[FIG. 24]

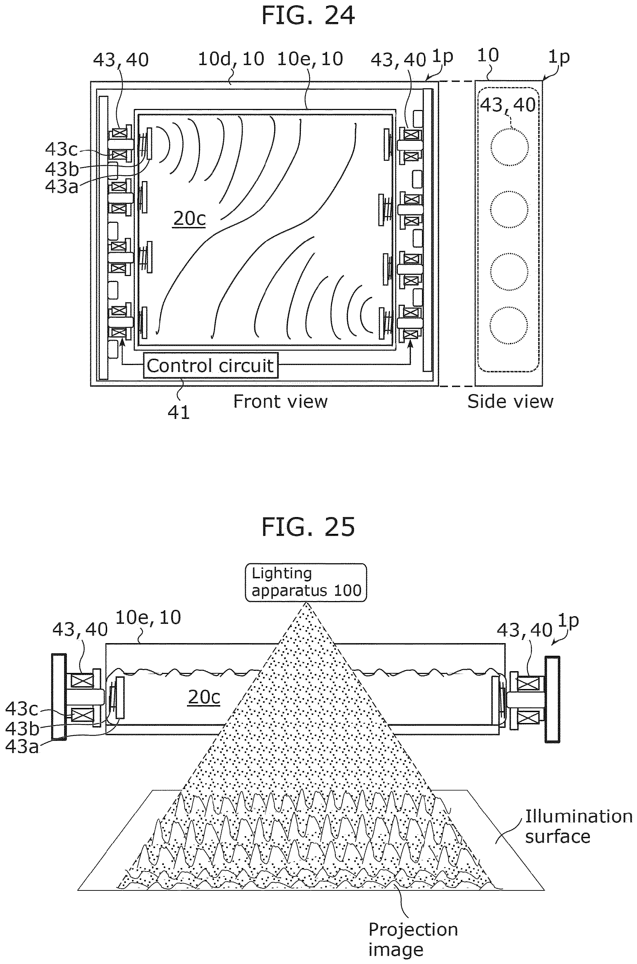

   FIG. 24 is a schematic diagram showing a filter apparatus according to Variation 14 of an embodiment as the filter apparatus is viewed from its front and from its side.
[FIG. 25]
   FIG. 25 is a schematic diagram showing how the light that a lighting apparatus according to Variation 14 of an embodiment emits is projected via a filter apparatus onto an illumination surface as a projection image.
[FIG. 26]

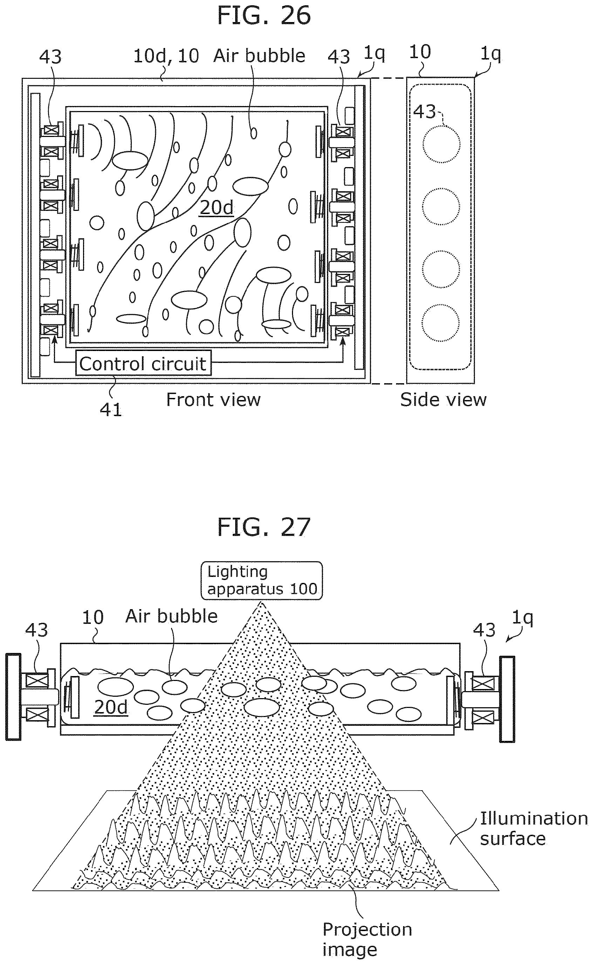

   FIG. 26 is a schematic diagram showing a filter apparatus according to Variation 15 of an embodiment as the filter apparatus is viewed from its front and from its side.
[FIG. 27]
   FIG. 27 is a schematic diagram showing how the light that a lighting apparatus according to Variation 15 of an embodiment emits is projected via a filter apparatus onto an illumination surface as a projection image.
[FIG. 28]

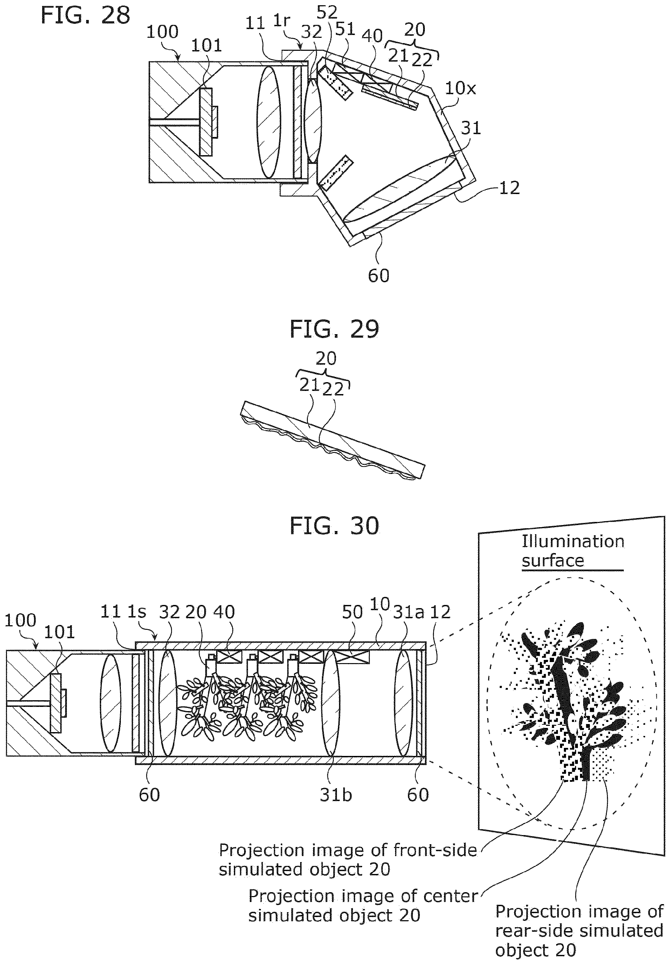

   FIG. 28 is a sectional view showing a filter apparatus and a lighting apparatus according to Variation 16 of an embodiment.
[FIG. 29]
   FIG. 29 is a sectional view showing a simulated object of a filter apparatus according to Variation 16 of an embodiment.
[FIG. 30]
   FIG. 30 depicts a sectional view showing a filter apparatus and a lighting apparatus according to another variation as well as a diagram showing a projection image.

### [Description of Embodiments]

### (Circumstances Leading to the Present Disclosure)

With the incorporation of information technology (IT) and the Internet of Things (IoT) accelerated in recent years, a strong demand has emerged for work style reforms as well as highly efficient workspaces. Along with such demands, workspaces are to be finely divided according to various work styles, including working from home, the workers' personalities, or changes in the workers' environment. Thus, each workspace needs a scheme that brings high value. Such schemes that bring high value may include, for example, a scheme that enhances one's concentration or a scheme that brings a highly refreshing effect. Among schemes that bring a refreshing effect visually is a phenomenon termed bioshadow, a phenomenon observed in a natural world. In addition, the light filtering through tree leaves and a fluctuation of light on a water surface, for example, that people may experience outdoors are representative examples of those which bring a visually refreshing effect and have a highly relaxing effect on people. In one conceivable explanation for such an effect, fluctuation of light and shadow permeates into a person's senses and brings a highly relaxing effect to the person.

Meanwhile, some products have appeared in recent years that reproduce, for example, the light filtering through tree leaves at home or in a workspace. Most of such products, however, provide monotonous, mostly still, shadow picture-like images. In this respect, some projectors have appeared that project a video image onto an illumination surface, with an aim of reproducing a more reality-like motion. However, since projectors are used in an environment where ambient light is dark, they can be used only in limited environments, or there may be cases in which projection images from projectors are not bright enough. Furthermore, projectors reproduce the same image repeatedly and have difficulty reproducing, for example, natural fluctuation of light and shadow, like the light filtering through tree leaves. In addition, projectors are usually expensive and large in size, and thus they may be installed or used only in limited places.

Accordingly, the present disclosure provides a filter apparatus that can be used in a bright environment and can project a bright projection image reproducing natural fluctuation of light and shadow.

Hereinafter, an embodiment will be described in specific terms with reference to some drawings.

It is to be noted that the embodiment described below merely illustrates a general or specific example. The numerical values, the shapes, the constituent elements, the arrangement positions and the connection modes of the constituent elements, the steps, the order of the steps, and so on illustrated in the following embodiment are examples and are not intended to limit the present disclosure. Furthermore, among the constituent elements described in the following embodiment, any constituent element that is not cited in the independent claim is to be construed as an optional constituent element.

Moreover, the drawings are schematic diagrams and do not necessarily provide exact depictions. Therefore, the scales and so on, for example, do not necessarily match among the drawings. Furthermore, in the drawings, substantially identical configurations are given identical reference characters, and duplicate description thereof will be omitted or simplified.

In the description of the embodiment below, expressions such as "substantially parallel" or "cylinder shape" are used. For example, the expression "substantially parallel" or the expression "cylinder shape" encompasses not only the state of being completely parallel or the shape that is completely cylindrical but also the state of being substantially parallel or the shape that is substantially cylindrical, and an error of, for example, a few percentages is permitted. Furthermore, the expression "substantially parallel" or the expression "cylinder shape" means the state of being substantially parallel or the shape that is substantially cylindrical within a range in which the advantageous effects of the present disclosure can be obtained. The explanation above applies in a similar manner to other expressions with the term "substantially" or with the term "shape".

### [Em bod iment]

### [Configuration]

A configuration of filter apparatus 1 according to the present embodiment will be described.

FIG. 1 is a schematic diagram showing filter apparatus 1 and lighting apparatus 100 according to an embodiment. In the example shown in FIG. 1, filter apparatus 1 can be attached to or detached from lighting apparatus 100. Specifically, in the example shown in FIG. 1, filter apparatus 1 indicated by the solid line can be mounted to lighting apparatus 100, or filter apparatus 1 indicated by the dashed-two-dotted line can be detached from lighting apparatus 100.

### [Filter Apparatus 1 and Lighting Apparatus 100]

As shown in FIG. 1, filter apparatus 1 can be attached to or detached from lighting apparatus 100. Lighting apparatus 100 is, for example but is not limited to, a spotlight or a downlight. Filter apparatus 1 is mounted in the direction in which light emitted from lamp 100a of lighting apparatus 100 travels, and thus filter apparatus 1 can transmit the light that lighting apparatus 100 emits. In the example according to the present embodiment, filter apparatus 1 is attached to lamp 100a of lighting apparatus 100. Alternatively, filter apparatus 1 can be attached to, for example but not limited to, a window or a door through which light passes into a room. Lighting apparatus 100 is one example of a light source. Alternatively, lamp 100a may be one example of a light source.

Meanwhile, as filter apparatus 1 is mounted to lighting apparatus 100, filter apparatus 1 can filter the light that lighting apparatus 100 emits. Specifically, when the light that lighting apparatus 100 emits passes through the inside of filter apparatus 1, filter apparatus 1 can filter a part of the passing light. When the filtered light is projected onto an illumination surface, a shadow and a color appears on the illumination surface. In other words, filter apparatus 1 can cause a shadow to appear in a projection image or cause a color to appear in a projection image when the light transmitted through the inside of filter apparatus 1 is projected onto the illumination surface. In other words, via simulated object 20 and first lens 31, filter apparatus 1 projects, onto an illumination surface, the light that lighting apparatus 100 has emitted, in the form of a projection image in which light and shadow fluctuate. In this example, a projection image is, for example, an image of the light filtering through tree leaves or an image of the light reflected on a water surface. FIG. 1 shows an image of the light filtering through tree leaves as an example of a projection image.

FIG. 2 depicts block diagrams showing filter apparatus 1 and lighting apparatus 100 according to the embodiment. FIG. 3 depicts a sectional view showing filter apparatus 1 and lighting apparatus 100 according to the embodiment as well as a diagram showing a projection image.

As shown in FIG. 2 and FIG. 3, lighting apparatus 100 includes lamp 100a, and lamp 100a includes light emitting module 101 and power source 102 for lighting. Light emitting module 101 and power source 102 for lighting are housed in a lamp body of lamp 100a. Light emitting module 101 includes substrate 101a and one or more light emitting elements 101b. Substrate 101a is a mounting board having a mounting surface for mounting one or more light emitting elements 101b thereon. Each of one or more light emitting elements 101b includes an LED chip and a phosphor that emits fluorescence light by converting the wavelength of the light that the light emitting element has emitted. The light that each of one or more light emitting elements 101b has emitted enters filter apparatus 1 mounted on lighting apparatus 100. The light that each of light emitting elements 101b emits, that is, the light that lighting apparatus 100 emits is a white light. It is to be noted that the light that lighting apparatus 100 emits is not limited to a white light and may be light of any other colors. Light emitting element 101b may be one example of a light source.

Filter apparatus 1 includes housing 10, simulated object 20, first lens 31, and driving device 40.

### [Housing 10]

As shown in FIG. 3, housing 10 can be attached to or detached from lamp 100a of lighting apparatus 100. Housing 10 may be able to be attached to or detached from lamp 100a of lighting apparatus 100 with a fixing member, such as a screw or a fastener. Housing 10 may be able to be attached to or detached from lamp 100a of lighting apparatus 100 as a coupling portion formed in housing 10 is coupled to a coupled portion formed in lamp 100a of lighting apparatus 100. For example, a coupling portion is an internal thread screw, and a coupled portion is an external thread screw.

Furthermore, housing 10 has a cylinder shape and opens at its front and rear ends to allow light to pass through housing 10. Housing 10 has a polygonal cylinder shape that opens at its front and rear ends according to the present embodiment. Alternatively, housing 10 may have a circular cylinder shape.

Herein, the rear end is the end of housing 10 through which light enters housing 10, and the rear end corresponds to inlet 11 of filter apparatus 1. Meanwhile, the front end is the end of housing 10 through which light passing through housing 10 exits housing 10, and the front end corresponds to outlet 12 of filter apparatus 1. In other words, the optical path of the light that passes through the inside of housing 10 according to the present embodiment is a straight line connecting inlet 11 and outlet 12.

Herein, housing 10 houses simulated object 20, driving device 40, and first lens 31. Simulated object 20, driving device 40, and first lens 31 housed in housing 10 are disposed inside housing 10 in such a manner that the light that has entered housing 10 can exit filter apparatus 1 to its outside.

### [Simulated Object 20]

Simulated object 20 is, for example but is not limited to, a plant, such as a tree or a flower, a cloud, an insect, a human, an animal, or a water surface, and simulated object 20 is an actual object or an object three-dimensionally simulating an actual object. Simulated object 20 is formed of, for example but not limited to, resin, wood, ceramics, metal, liquid, or gel.

Simulated object 20 is a three-dimensional body or a planar body formed by one or more members coupled to each other. In a case in which simulated object 20 is a three-dimensional body simulating an actual plant flower, simulated object 20 may be an artificial flower. Meanwhile, in a case in which simulated object 20 is a planar body on which an actual plant flower is depicted, simulated object 20 may be a sheet or a film of, for example, a paper cut. Furthermore, simulated object 20 may be a water surface of actual water.

Meanwhile, in a case in which simulated object 20 is a three-dimensional body, filter apparatus 1 can vary the shade of a projection image in part and/or temporally by utilizing the effect of the focal point of first lens 31, the three-dimensional depth of simulated object 20, and the fluctuation of simulated object 20 relative to the traveling direction of the light that passes through filter apparatus 1.

Furthermore, simulated object 20 can be moved mechanically by driving device 40.

Specifically, simulated object 20 can be moved by driving device 40, for example, to fluctuate, to rotate, to deform, or to stretch and contract. For example, simulated object 20 can be moved by driving device 40 to fluctuate quickly.

To be more specific, simulated object 20 is formed by one or more members. In a case in which simulated object 20 is formed by a plurality of members, the plurality of members forming simulated object 20 are of different materials, have different thicknesses, and have different weights. Therefore, when driving device 40 applies an intermittent force or a continuous force to simulated object 20, the plurality of members forming simulated object 20 move in different motions or with a temporal delay from each other. In other words, the plurality of members forming simulated object 20 fluctuate in irregular patterns.

For example, in a case in which simulated object 20 is a tree, different parts of the tree, such as the trunk, thin branches, and the leading end of each branch, may differ in thickness. Thus, even if a plurality of members forming simulated object 20 are made of the same material, each member bends in a different manner or bows in a different manner when simulated object 20 is moved. Therefore, simulated object 20 moves in such a manner that produces different motions between different members. Furthermore, as simulated object 20 is moved in such a manner that causes the members forming simulated object 20 to move with a temporal delay from each other, simulated object 20 can reproduce a variety of fluctuation states close to those observed in nature. Furthermore, if simulated object 20 is formed by members of different materials, even when the members have the same thickness, simulated object 20 can be moved in such a manner that produces different motions between different members or that cause the members to move with a temporal delay from each other. Furthermore, if members representing leaves have different weights, even a greater variety of larger motions can be produced.

In another example, in a case in which simulated object 20 is a planar body, an elastic film or sheet may be used as simulated object 20. For example, in a case in which a sheet has a rectangular shape, driving device 40 can stretch the sheet, for example, in a diagonal direction or in four directions. When driving device 40 causes planar simulated object 20 to stretch or to contract, a variety of fluctuation states close to those observed in nature can be reproduced by a projection image projected on the illumination surface.

Meanwhile, simulated object 20 is supported by housing 10 or by driving device 40. In a case in which simulated object 20 is supported by housing 10, simulated object 20 can move as a vibration is applied to simulated object 20 by driving device 40. Meanwhile, in a case in which simulated object 20 is supported by driving device 40, simulated object 20 can move in tandem with the driving of driving device 40.

Furthermore, simulated object 20 is illuminated by the light that lighting apparatus 100 emits. In this case, when simulated object 20 is moved by driving device 40 and when the illumination surface is illuminated by the light that has traveled through or by simulated object 20, the fluctuation of light and shadow produced by simulated object 20 can be projected onto the illumination surface. In this example, the light that has traveled through or by simulated object 20 means the light that has been transmitted through simulated object 20 or that has passed by simulated object 20 without being transmitted through simulated object 20.

According to the present embodiment, simulated object 20 is disposed closer to lighting apparatus 100 than first lens 31 is. In other words, simulated object 20 is disposed closer to lighting apparatus 100 than first lens 31 is, that is, disposed closer to the rear end of filter apparatus 1. It is preferable that simulated object 20 be disposed in the vicinity of inlet 11 of filter apparatus 1. Herein, simulated object 20 may be disposed farther from lighting apparatus 100 than first lens 31 is. In other words, simulated object 20 may be disposed in the front end side of filter apparatus 1.

Furthermore, simulated object 20 may have a light transmissive property. In other words, simulated object 20 may include a member having a light transmissive property. Furthermore, a part or the whole of simulated object 20 may be colored. Therefore, as shown in FIG. 4, even in a case in which lighting apparatus 100 emits a white light, the light that is transmitted through filter apparatus 1 can add a color to the projection image through simulated object 20. That a color is added to a projection image means that the projection image has a color different from the color of the light that lighting apparatus 100 emits. Herein, FIG. 4 depicts a sectional view showing filter apparatus 1 and lighting apparatus 100 according to the embodiment as well as a diagram showing a colored projection image.

### [First Lens 31]

As shown in FIG. 3, first lens 31 is a projection lens that can transmit the light that lighting apparatus 100 has emitted and has passed through simulated object 20 and that can project a projection image onto a target object. In other words, first lens 31 can image such light on an illumination surface. According to the present embodiment, first lens 31 is a convex lens. First Lens 31 may have an optical controlling function of, for example, providing a wide angle light distribution, providing a narrow angle light distribution, dimming light, or scattering light.

According to the present embodiment, first lens 31 is disposed farther from lighting apparatus 100 than simulated object 20 is. Specifically, first lens 31 is fixed to housing 10 with first lens 31 covering the opening at the front end of housing 10. Herein, first lens 31 may be disposed closer to lighting apparatus 100 than simulated object 20 is. In other words, first lens 31 may be disposed closer to lighting apparatus 100 than simulated object 20 is, that is, disposed in the rear end side of filter apparatus 1.

Furthermore, first lens 31 is made of resin. Herein, first lens 31 may be made of glass.

### [Driving Device 40]

Driving device 40 can move simulated object 20 mechanically. Specifically, driving apparatus 40 can move simulated object 20 at 1/f fluctuation. To be more specific, driving device 40 applies an intermittent force or a continuous force to simulated object 20. In other words, with an intermittent force or a continuous force, driving device 40 produces different motions between a plurality of members forming simulated object 20 or moves the plurality of members forming simulated object 20 with a temporal delay from each other. With this configuration, simulated object 20 moves at 1/f fluctuation, and thus a projection image can reproduce fluctuation of light and shadow at 1/f fluctuation. Herein, the manner in which simulated object 20 is moved is not limited to being moved at 1/f fluctuation, and simulated object 20 may be moved in a variety of artificial manners, including in a simple repetitive motion.

Meanwhile, as shown in FIG. 2 and FIG. 3, driving device 40 includes control circuit 41 that controls the force for moving simulated object 20.

Control circuit 41 controls the movement of simulated object 20. Specifically, control circuit 41 controls, for example but not limited to, the timing at which the force that moves simulated object 20 is applied to simulated object 20, the magnitude of the force applied to simulated object 20, or the temporal change in the force applied to simulated object 20. In other words, control circuit 41 intermittently or continuously controls the driving of driving device 40.

Driving device 40 according to the present embodiment may be provided with a battery that provides itself with an electric power for driving driving device 40. Furthermore, the battery may be provided in housing 10. Furthermore, the battery is a primary battery or a secondary battery. In a case in which the battery is a secondary battery, filter apparatus 1 may include a power source provided with a power generating element, such as a solar cell (a light conversion element) capable of generating power. In this case, the electric energy that the solar cell generates can be stored in the secondary battery.

Meanwhile, filter apparatus 1 does not have to be provided with a battery. In this case, driving device 40 may be driven on the electric power supplied from power source 102 of lighting apparatus 100.

### [Workings and Advantageous Effects]

Workings and advantageous effects of filter apparatus 1 according to the present embodiment will be described.

As described above, filter apparatus 1 according to the present embodiment is filter apparatus 1 that transmits light that a light source (lighting apparatus 100) emits. Filter apparatus 1 includes simulated object 20 illuminated by the light that the light source has emitted, driving device 40 that mechanically moves simulated object 20, and first lens 31 that transmits the light that the light source has emitted and that has passed through simulated object 20. Then, filter apparatus 1 projects, onto an illumination surface, the light that has traveled from the light source via simulated object 20 and first lens 31 and that serves as a projection image of fluctuation of light and shadow.

According to this configuration, the light that lighting apparatus 100 has emitted is projected onto the illumination surface via simulated object 20 and first lens 31. Therefore, even when the ambient environment is bright, filter apparatus 1 can produce light and shadow over the projection image projected on the illumination surface.

Furthermore, since driving device 40 can move simulated object 20, the fluctuation of light and shadow can be expressed in the projection image projected on the illumination surface.

Accordingly, a projection image that can be used in a bright environment and that reproduces a bright, natural fluctuation of light and shadow can be provided.

In particular, filter apparatus 1 can express the fluctuation of light and shadow when filter apparatus 1 only includes at least simulated object 20, first lens 31, and driving device 40. Therefore, unlike a conventional projector, this filter apparatus 1 is less likely to be expensive or large in size and is less likely to suffer from limitations in terms of the places where filter apparatus 1 can be used.

Furthermore, filter apparatus 1 according to the present embodiment can be attached to or detached from the light source.

According to this configuration, filter apparatus 1 can be mounted integrally onto lighting apparatus 100, or filter apparatus 1 mounted on lighting apparatus 100 can be removed from lighting apparatus 100. Therefore, filter apparatus 1 can be attached to or detached from lighting apparatus 100.

Furthermore, in a case in which the power source of driving device 40 is embedded in filter apparatus 1, wiring for supplying power from the power source to driving device 40 can be eliminated.

Therefore, filter apparatus 1 can be used more flexibly, and the rise in the cost of manufacturing filter apparatus 1 can be prevented.

Furthermore, in filter apparatus 1 according to the present embodiment, simulated object 20 is a three-dimensional body or a planar body formed by one or more members coupled to each other, and simulated object 20 can be moved by driving device 40 to fluctuate, to rotate, to deform, or to stretch and contract.

According to this configuration, a variety of fluctuation states close to those observed in nature can be reproduced by providing a projection image close to a bioshadow with a fluctuation of natural light filtering through tree leaves or natural light reflected on a water surface.

Furthermore, in filter apparatus 1 according to the present embodiment, simulated object 20 is formed by a plurality of members. Furthermore, the plurality of members forming simulated object 20 are of different materials, have different thicknesses, and have different weights. Then, driving device 40 applies an intermittent force or a continuous force to simulated object 20.

According to this configuration, a variety of fluctuation states close to those observed in nature can be reproduced by providing a projection image close to a bioshadow with a fluctuation of natural light filtering through tree leaves or natural light reflected on a water surface.

Furthermore, in filter apparatus 1 according to the present embodiment, driving device 40 includes control circuit 41 that controls the force for moving simulated object 20. Then, control circuit 41 controls the movement of simulated object 20.

According to this configuration, a more natural, reality-like projection image can be provided.

Furthermore, in filter apparatus 1 according to the present embodiment, a projection image is an image of the light filtering through tree leaves or an image of the light reflected on a water surface.

According to this configuration, a variety of fluctuation states close to those observed in nature can be reproduced by providing a projection image close to a bioshadow with a fluctuation of natural light filtering through tree leaves or natural light reflected on a water surface.

Furthermore, in filter apparatus 1 according to the present embodiment, driving device 40 moves simulated object 20 at 1/f fluctuation.

According to this configuration, as the projection image moves at 1/f fluctuation, a projection image close to a bioshadow with a fluctuation of natural light filtering through tree leaves or natural light reflected on a water surface can be provided, and thus a variety of fluctuation states close to those observed in nature can be reproduced.

Furthermore, filter apparatus 1 according to the present embodiment can vary the shade of a projection image in part and/or temporally by utilizing the effect of the focal point of first lens 31, the thickness of simulated object 20, and the fluctuation of simulated object 20 relative to the traveling direction of the light that passes through filter apparatus 1.

According to this configuration, a variety of fluctuation states close to those observed in nature can be reproduced by providing a projection image close to a bioshadow with a fluctuation of natural light filtering through tree leaves or natural light reflected on a water surface.

Furthermore, in filter apparatus 1 according to the present embodiment, simulated object 20 has a light transmissive property, and a part or the whole of simulated object 20 is colored.

With this filter apparatus 1, not only a monochrome projection image but also a projection image colored by the shadow of simulated object 20 can be obtained, and thus a greater variety of projection images can be provided. As a result, filter apparatus 1 can provide a naturally non-occurring, artistic projection image.

### [Variation 1 of Embodiment]

Filter apparatus 1a according to the present variation differs from the filter apparatus according to the embodiment in that filter apparatus 1a includes power source 50. Of the configurations and the functions of filter apparatus 1a according to the present variation, configurations and functions that are identical to the configurations and the functions of the filter apparatus according to the embodiment are given identical reference characters, and the detailed description of such configurations and functions will be omitted.

Filter apparatus 1a according to the present variation will be described with reference to FIG. 5.

FIG. 5 depicts a sectional view showing filter apparatus 1a and lighting apparatus 100 according to Variation 1 of the embodiment as well as a diagram showing a projection image.

As shown in FIG. 5, filter apparatus 1a further includes power source 50.

Power source 50 is a motive power source of driving device 40. Furthermore, power source 50 is, for example, a power source circuit in which a plurality of electronic components are mounted on a printed circuit board. Power source 50 according to the present variation is housed in housing 10.

The electric power from lighting apparatus 100 does not need to be supplied to driving device 40 according to the present variation. Therefore, a power source wire for supplying power from lighting apparatus 100 does not need to be provided in filter apparatus 1a. Furthermore, since no power source wire is provided in filter apparatus 1a according to the present variation, filter apparatus 1a can be attached to or detached from lighting apparatus 100 more easily.

Furthermore, power source 50 includes a battery that is mounted on housing 10 and that provides an electric power for driving driving device 40. The battery is a primary battery or a secondary battery.

Filter apparatus 1a according to the present variation configured as described above further includes power source 50 that serves as a motive power source of driving device 40.

According to this configuration, since power source 50 of driving device 40 is embedded in filter apparatus 1a, no wiring is needed from lighting apparatus 100 to filter apparatus 1a. Therefore, this filter apparatus 1a can provide a safe, reliable, and easy implementation.

### [Variation 2 of Embodiment]

Filter apparatus 1b according to the present variation differs from the filter apparatus according to Variation 1 of the embodiment in that filter apparatus 1b further includes power source 50 that includes power storage element 51 and power generating element 52. Of the configurations and the functions of filter apparatus 1b according to the present variation, configurations and functions that are identical to the configurations and the functions of the filter apparatus according to the embodiment are given identical reference characters, and the detailed description of such configurations and functions will be omitted.

Filter apparatus 1b according to the present variation will be described with reference to FIG. 6, FIG. 7, and so on.

FIG. 6 depicts a sectional view showing filter apparatus 1b and lighting apparatus 100 according to Variation 2 of the embodiment as well as a fragmentary sectional view, taken along the A-A line, showing housing 10, power generating element 52, and simulated object 20 of filter apparatus 1b. FIG. 7 depicts block diagrams showing filter apparatus 1b and lighting apparatus 100 according to Variation 2 of the embodiment.

As shown in FIG. 6 and FIG. 7, filter apparatus 1b further includes power source 50.

Power source 50 is a motive power source of driving device 40. In other words, power source 50 is, for example, a power source circuit in which a plurality of electronic components are mounted on a printed circuit board. Power source 50 according to the present variation is housed in housing 10.

The electric power from lighting apparatus 100 does not need to be supplied to driving device 40 according to the present variation. Therefore, a power source wire for supplying power from lighting apparatus 100 does not need to be provided in filter apparatus 1b. Furthermore, since no power source wire is provided in filter apparatus 1b according to the present variation, filter apparatus 1b can be attached to or detached from lighting apparatus 100 more easily.

Furthermore, power source 50 includes power storage element 51 that is provided in filter apparatus 1b and that provides an electric power for driving driving device 40. Power storage element 51 is a secondary battery and stores electric energy.

Furthermore, power source 50 further includes power generating element 52 capable of generating power, such as a solar cell. Power generating element 52 can generate electric energy by receiving the light that lighting apparatus 100 emits. Furthermore, power generating element 52 can store the generated electric energy into power storage element 51. In this case, a small-capacity power storage member, such as a capacitor, can also be used as power storage element 51.

Furthermore, power source 50 is provided so as to be capable of generating power from the light from lighting apparatus 100.

Specifically, power source 50 includes one or more power generating elements 52 disposed inside filter apparatus 1b. For example, with the front and rear direction of housing 10 being regarded as an axis, one or more power generating elements 52 of power source 50 are disposed along the circumferential direction on the inner peripheral surface of housing 10. In other words, power generating elements 52 are disposed in such a manner that puts the light receiving surface of each power generating element 52 to be substantially parallel to the front and rear direction of housing 10.

To be more specific, power generating elements 52 are disposed in such a manner that the light that lighting apparatus 100 emits become directly incident on power generating elements 52. In other words, power generating elements 52 are disposed closer to lighting apparatus 100 than simulated object 20 is. Even when power generating elements 52 are disposed in such a manner that their light receiving surfaces are substantially parallel to the front and rear direction, as power generating elements 52 are disposed close to lighting apparatus 100, power generating elements 52 can receive the light emitted directly from lighting apparatus 100 as well as the light reflected inside filter apparatus 1b. In this manner, power generating elements 52 can generate power from the light effectively and can be so disposed as not to block the light to be transmitted through filter apparatus 1b. Since the amount of light transmitted through filter apparatus 1b is less likely to be reduced by power generating elements 52, this filter apparatus 1b can project a bright projection image onto an illumination surface. Herein, if the light that lighting apparatus 100 emits is intense, or if a small amount of driving energy suffices, power generating elements 52 may be disposed closer to first lens 31 than simulated object 20 is.

Herein, if a plurality of power generating elements 52 are provided inside filter apparatus 1b, the plurality of power generating elements 52 are electrically connected to each other in series or in parallel.

Now, another example of the arrangement of power generating elements 52 will be described with reference to FIG. 8.

FIG. 8 depicts a sectional view showing filter apparatus 1b and lighting apparatus 100 according to Variation 2 of the embodiment as well as a fragmentary sectional view, taken along the B-B line, showing housing 10, power generating element 52, and simulated object 20 of filter apparatus 1b.

In this other example, as shown in FIG. 8, power generating element 52 of power source 50 is disposed within housing 10 at such a position that the shadow of power generating element 52 is not cast in the projection image on the illumination surface.

Specifically, power generating element 52 is disposed at such an orientation that puts the light receiving surface of power generating element 52 to be orthogonal to the optical axis of the light that lighting apparatus 100 emits and that passes through the inside of filter apparatus 1b (i.e., the optical axis of filter apparatus 1b). Furthermore, power generating element 52 is disposed close to first lens 31 and to the front side or the rear side of first lens 31. Furthermore, with filter apparatus 1b viewed in the front and rear direction, power generating element 52 and simulated object 20 partly overlap each other. In the example shown in FIG. 8, power generating element 52 is disposed to the rear side of first lens 31.

If power generating element 52 is disposed at such an orientation that puts the light receiving surface of power generating element 52 to be orthogonal to the optical axis of filter apparatus 1b, there may be a concern that power generating element 52 causes a shadow to appear on the illumination surface. In reality, however, even if power generating element 52 is disposed on the optical axis of filter apparatus 1b, if power generating element 52 is disposed at a position away from simulated object 20, or in particular, if power generating element 52 is disposed to the front side of first lens 31 (between first lens 31 and simulated object 20) or to the rear side of first lens 31, the image of power generating element 52 is not formed in a projection image. Therefore, even with the aforementioned arrangement, it is merely that the overall projection image projected on the illumination surface becomes somewhat dark. With the use of such a characteristic, power generating element 52 can be disposed inside housing 10 at such an orientation that puts the light receiving surface of power generating element 52 to be orthogonal to the optical axis direction, and thus a large amount of power can be expected to be generated by power generating element 52.

In filter apparatus 1b according to the present variation configured as described above, power source 50 can generate power from the light from the light source (lighting apparatus 100).

According to this configuration, power source 50 embedded in filter apparatus 1b has an independent power generator, such as a solar cell, instead of a battery. Therefore, with filter apparatus 1b, no battery replacement or maintenance is needed, and thus a high reliability can be ensured.

In filter apparatus 1b according to the present variation configured as described above, power source 50 includes power storage element 51 that stores generated electric energy.

According to this configuration, as filter apparatus 1b has a power storage function, filter apparatus 1b can provide large power and energy to driving device 40 when necessary.

In filter apparatus 1b according to the present variation configured as described above, power source 50 includes power generating element 52. Then, power generating element 52 is a solar cell, and one or more power generating elements 52 are disposed inside filter apparatus 1b.

According to this configuration, as shown in FIG. 6, a solar cell can be disposed at close proximity to lighting apparatus 100 even when no solar cell is disposed at the center portion where the optical path of filter apparatus 1b extends, and thus the solar cell can effectively receive the light that lighting apparatus 100 emits and can generate power from that light. For example, solar cells can be disposed so as to be electrically in series or in parallel, and thus a desired power generation voltage and a reduction of the internal resistance can be achieved. As a result, in this filter apparatus 1b, various driving devices 40 can be driven efficiently.

Filter apparatus 1b according to the present variation configured as described above further includes housing 10 that houses simulated object 20, first lens 31, and power generating element 52. Then, power generating element 52 is disposed within housing 10 at a such a position that the shadow of power generating element 52 is not cast in the projection image on the illumination surface.

For example, as shown in FIG. 8, even if simulated object 20 is disposed at close proximity to lighting apparatus 100, filter apparatus 1b can project a projection image onto an illumination surface via first lens 31. In this case, with the optical effect of first lens 31, even if another object is disposed at a position where an image of simulated object 20 is not focused, this other object is less likely to be projected in the projection image, and it is merely that the brightness of the projection image decreases. With the use of this characteristic, even if a solar cell is disposed at a position where the image of simulated object 20 is not focused and at an orientation that puts the solar cell to oppose the light passing along the optical path inside filter apparatus 1b, the solar cell is less likely to be projected onto the illumination surface as a projection image. Therefore, this filter apparatus 1b can receive a larger portion of the light that lighting apparatus 100 emits, and thus high output power generation can be expected.

### [Variation 3 of Embodiment]

Filter apparatus 1c according to the present variation differs from the filter apparatus according to Variation 2 of the embodiment in that filter apparatus 1c includes filter plate 60. Of the configurations and the functions of filter apparatus 1c according to the present variation, configurations and functions that are identical to the configurations and the functions of the filter apparatus according to Variation 2 of the embodiment are given identical reference characters, and the detailed description of such configurations and functions will be omitted.

Filter apparatus 1c according to the present variation will be described with reference to FIG. 9.

FIG. 9 depicts a sectional view showing filter apparatus 1c and lighting apparatus 100 according to Variation 3 of the embodiment as well as a diagram showing a projection image.

As shown in FIG. 9, filter apparatus 1c further includes filter plate 60.

At least one or more filter plates 60 are disposed between inlet 11 of filter apparatus 1c through which the light of lighting apparatus 100 enters filter apparatus 1c and outlet 12 of filter apparatus 1c through which the light of lighting apparatus 100 exits filter apparatus 1c. In other words, filter plate 60 may be disposed at any position within housing 10. In the example shown in FIG. 9, filter plate 60 is disposed at each of the front end and the rear end of housing 10. Specifically, in the example shown in FIG. 9, filter plates 60 are disposed between the front end of housing 10 and first lens 31 and between the rear end of housing 10 and simulated object 20. Herein, filter plate 60 may simply be provided at either one of the front end and the rear end of housing 10.

Furthermore, filter plate 60 has a function of changing the light that lighting apparatus 100 has emitted and/or a function of protecting the inside of filter apparatus 1c.

In a case in which filter plate 60 has a function of changing the light, filter plate 60 changes the brightness of the light passing through filter apparatus 1c or changes the color of the light passing through filter apparatus 1c, and thus filter plate 60 changes a projection image projected onto an illumination surface. Furthermore, filter plate 60 adds a light and shadow pattern to the passing light, adds blurring to the passing light, adds a gradation to the passing light, or polarizes the passing light, and thus filter plate 60 changes a projection image projected onto an illumination surface. In other words, filter plate 60 changes a projection image projected onto an illumination surface such that a change in at least one of the brightness, the color, the light and shadow pattern, the blurring, the gradation, or the polarization appears in the passing light.

Meanwhile, in a case in which filter plate 60 has a function of protecting the inside of filter apparatus 1c, filter plate 60 tightly seals housing 10 so that dust, moisture, or the like does not enter the inside of filter apparatus 1c, that is, the inside of housing 10. In other words, filter plate 60 tightly seals housing 10 by covering the entire openings at the front and rear ends of housing 10. Furthermore, by blocking a blue light, filter plate 60 can suppress optical damage to eyes that could be caused as a user looks into filter apparatus 1c.

Filter apparatus 1c according to the present variation configured as described above further includes at least one or more filter plates 60 disposed between inlet 11 of filter apparatus 1c through which the light of the light source (lighting apparatus 100) enters filter apparatus 1c and outlet 12 of filter apparatus 1c through which the light of the light source exits filter apparatus 1c, and filter plate 60 has a function of changing the light that lighting apparatus 100 has emitted and/or a function of sealing the inside of filter apparatus 1c.

According to this configuration, filter plate 60 can change a projection image projected onto an illumination surface such that a change in at least one of the brightness, the color, the light and shadow pattern, the blurring, the gradation, or the polarization appears in the passing light.

Furthermore, filter plate 60 can protect the inside of filter apparatus 1c so that dust, moisture, or the like does not enter the inside of filter apparatus 1c. Furthermore, filter plate 60 can suppress optical damage to eyes that could be caused as a user looks into filter apparatus 1c.

Furthermore, this filter apparatus 1c can improve the quality of a projection image or make a change to a projection image in accordance with the user's preferences by causing the light of lighting apparatus 100 to pass through filter plate 60. Furthermore, this filter apparatus 1c can make a variety of changes to a projection image by changing the overall color of the projection image or by adding a gradation to the overall color of the projection image. As a result, this filter apparatus 1c can provide enjoyment to the user through the projection image.

### [Variation 4 of Embodiment]

Filter apparatus 1d according to the present variation differs from the filter apparatus according to the embodiment and so on in that filter apparatus 1d includes filter plate 60, power source 50, and second lens 32. Of the configurations and the functions of filter apparatus 1d according to the present variation, configurations and functions that are identical to the configurations and the functions of the filter apparatus according to the embodiment and so on are given identical reference characters, and the detailed description of such configurations and functions will be omitted.

Filter apparatus 1d according to the present variation will be described with reference to FIG. 10.

FIG. 10 depicts a sectional view showing filter apparatus 1d and lighting apparatus 100 according to Variation 4 of the embodiment as well as a diagram showing a projection image.

As shown in FIG. 10, filter apparatus 1d further includes power source 50, filter plate 60, and second lens 32.

Power source 50 is a motive power source of driving device 40. Furthermore, power source 50 includes a battery that is mounted on housing 10 and that provides an electric power for driving driving device 40. The battery is a primary battery or a secondary battery.

Filter plate 60 has a function of changing the light that lighting apparatus 100 has emitted and/or a function of protecting the inside of filter apparatus 1d.

Second lens 32 is disposed close to the side of filter apparatus 1d where filter apparatus 1d is to be attached to lighting apparatus 100. Second lens 32 is a field lens having a convex lens shape. Furthermore, second lens 32 may have an optical controlling function of, for example, providing a wide angle light distribution, providing a narrow angle light distribution, dimming light, or scattering light. Furthermore, second lens 32 is made of resin. Herein, second lens 32 may instead be made of glass.

Simulated object 20 is disposed between first lens 31 and second lens 32. In other words, second lens 32 is disposed between the rear end of housing 10 and simulated object 20. In the example shown in FIG. 10, second lens 32 is disposed between simulated object 20 and filter plate 60 disposed at the rear end of housing 10. Herein, it is preferable that simulated object 20 be disposed close to second lens 32.

Filter apparatus 1d according to the present variation configured as described above further includes second lens 32 having a convex lens shape and disposed close to the side of filter apparatus 1d where filter apparatus 1d is to be attached to the light source (lighting apparatus 100). Then, simulated object 20 is disposed between first lens 31 and second lens 32.

According to this configuration, since second lens 32 is provided in filter apparatus 1d, an outline of a projection image can be formed naturally.

Furthermore, in filter apparatus 1d according to the present embodiment, first lens 31 and/or second lens 32 are/is made of resin.

According to this configuration, lighter filter apparatus 1d can be obtained than when a filter apparatus includes a lens made, for example, of glass.

### [Variation 5 of Embodiment]

Filter apparatus 1e according to the present variation differs from the filter apparatus according to Variation 4 of the embodiment in that filter apparatus 1e includes a plurality of first lenses 31. Of the configurations and the functions of filter apparatus 1e according to the present variation, configurations and functions that are identical to the configurations and the functions of the filter apparatus according to Variation 4 of the embodiment are given identical reference characters, and the detailed description of such configurations and functions will be omitted.

Filter apparatus 1e according to the present variation will be described with reference to FIG. 11.

FIG. 11 depicts a sectional view showing filter apparatus 1e and lighting apparatus 100 according to Variation 5 of the embodiment as well as a diagram showing a projection image.

As shown in FIG. 11, filter apparatus 1e includes a plurality of first lenses 31.

First lens 31 is a convex lens, and one or more first lenses 31 are provided in housing 10. In a case in which a plurality of first lenses 31 are provided in housing 10, the magnification, the number, and the positions of the plurality of first lenses 31 are set in accordance with the size of lighting apparatus 100, the size of filter apparatus 1e, the position of simulated object 20, and the distance from filter apparatus 1e to the illumination surface. Therefore, as the position of each first lens 31 or the number of first lenses 31 is changed, the size of the projection image projected on the illumination surface can be increased or reduced. In the example shown in FIG. 11, the size of the projection image projected on the illumination surface has been increased.

Furthermore, adjacent two first lenses 31 among the plurality of first lenses 31 may be disposed in contact with each other or spaced apart from each other. In the example shown in FIG. 11, one first lens 31a is disposed at the front end of housing 10, and other first lens 31b is disposed between simulated object 20 and one first lens 31a. Other first lens 31b may be disposed closer to first lens 31a than power source 50 is so that other first lens 31b becomes adjacent to one first lens 31a.

Furthermore, although not depicted, a sectional shape of first lens 31 cut along a plane orthogonal to the optical axis of first lens 31 may differ from a sectional shape of first lens 31 cut along a plane orthogonal to the optical axis of second lens 32. In other words, filter apparatus 1e may include a plurality of sets of lenses with each set containing a lens or lenses having, when the lens is cut along a plane orthogonal to the optical axis of the lens, a sectional shape different from that of a lens or lenses in other sets. Therefore, for example, one or more first lenses 31 among the plurality of first lenses 31 may be double convex lenses, and remaining one or more first lenses 31 among the plurality of first lenses 31 may be single convex lenses.

In filter apparatus 1e according to the present variation configured as described above, first lens 31 is a convex lens, and one or more first lenses 31 are provided. Then, in a case in which a plurality of first lenses 31 are provided, the magnification, the number, and the positions of the plurality of first lenses 31 are set in accordance with the size of the light source (lighting apparatus 100), the size of filter apparatus 1e, the position of simulated object 20, and the distance from filter apparatus 1e to the illumination surface.

According to this configuration, the size of a projection image, how the projection image looks, and the level of shadow over the projection image can be adjusted as appropriate in accordance with the position of lighting apparatus 100 to which filter apparatus 1e is attached, the position of the illumination surface onto which the projection image is projected, and the angle at which the projection image is projected onto the illumination surface.

In filter apparatus 1e according to the present variation configured as described above, first lens 31 includes a convex lens and includes a plurality of sets of lenses with each set containing a lens or lenses having, when cut along a plane orthogonal to the optical axis of first lens 31, a sectional shape different from that of a lens or lenses in other sets.

According to this configuration, the size and the price of filter apparatus 1e can be reduced.

### [Variation 6 of Embodiment]

Filter apparatus 1f according to the present variation differs from the filter apparatus according to the embodiment and so on in that filter apparatus 1f includes a plurality of simulated objects 20. Of the configurations and the functions of filter apparatus 1f according to the present variation, configurations and functions that are identical to the configurations and the functions of the filter apparatus according to the embodiment and so on are given identical reference characters, and the detailed description of such configurations and functions will be omitted.

Filter apparatus 1f according to the present variation will be described with reference to FIG. 12A and FIG. 12B.

FIG. 12A depicts a sectional view showing filter apparatus 1f and lighting apparatus 100 according to Variation 6 of the embodiment as well as a diagram showing a projection image. FIG. 12B is a diagram showing how simulated object 20 is moved in filter apparatus 1f according to Variation 6 of the embodiment. FIG. 12B shows three cases: a case in which each simulated object 20 stands alone, a case in which two simulated objects 20 are integrated, and a case in which two simulated objects 20 are driven separately from each other. Simulated object 20 shown in FIG. 12B can fluctuate in a variety of directions depending on how driving device 40 is arranged relative to housing 10, and simulated object 20 can, for example, fluctuate along a plane perpendicular to the traveling direction of the light (fluctuate right and left relative to the traveling direction of the light), fluctuate front and back along the traveling direction of the light, or fluctuate diagonally relative to the traveling direction of the light, that is, in a direction somewhere between the first two directions.

A plurality of simulated objects 20 are provided in filter apparatus 1f. In the example shown in FIG. 12A, two simulated objects 20 are integrated. Each of the plurality of simulated objects 20 is moved by driving device 40 to fluctuate, to rotate, to deform, or to stretch and contract independently of each other, as shown in FIG. 12A. In other words, driving device 40 can directly move simulated object 20 through an electromagnetic force and/or an electrostatic force.

Specifically, driving device 40 includes motor 40a and attachment portion 40b attached to the rotary shaft of motor 40a. Motor 40a is driven by the electric power supplied from power source 50. Furthermore, the number of rotations of the rotary shaft of motor 40a is controlled by control circuit 41. Attachment portion 40b can move in tandem with the rotary shaft. Furthermore, simulated object 20 can be attached to attachment portion 40b.

Meanwhile, as shown in FIG. 13A, an elastic member, such as spring 44, can be attached between attachment portion 40b and simulated object 20. In other words, attachment portion 40b is attached to one end of spring 44, and simulated object 20 is attached to the other end of spring 44. Herein, FIG. 13A is a diagram showing cases in which spring 44 is disposed between simulated object 20 and driving device 40 of filter apparatus 1f according to Variation 6 of the embodiment. Spring 44 is one example of an elastic member.

As can be seen from attachment example 1 shown in FIG. 13A, spring 44 is disposed in such a manner that the axial direction of the rotary shaft of motor 40a (the lengthwise direction of the rotary shaft) is substantially orthogonal to the lengthwise direction of spring 44. Furthermore, attachment portion 40b is attached to the one end of spring 44. Meanwhile, simulated object 20 is disposed in such a manner that the lengthwise direction of simulated object 20 is substantially parallel to the lengthwise direction of spring 44. Furthermore, simulated object 20 is attached to the other end of spring 44. Therefore, simulated object 20 can fluctuate along a two-dimensional plane mainly in the direction of rotation and in the direction of the gravitational force (the vertical direction) by the gravitational force that acts on spring 44 and simulated object 20 and the driving force of motor 40a.

As can be seen from attachment example 2 shown in FIG. 13A, spring 44 is disposed in such a manner that the axial direction of the rotary shaft of motor 40a is substantially parallel to the lengthwise direction of spring 44. Furthermore, attachment portion 40b is attached to the one end of spring 44. Meanwhile, simulated object 20 is disposed in such a manner that the lengthwise direction of simulated object 20 is substantially orthogonal to the lengthwise direction of spring 44. Furthermore, simulated object 20 is attached to the other end of spring 44. Therefore, simulated object 20 can fluctuate along a two-dimensional plane mainly in the direction of rotation and in the direction of the gravitational force (the vertical direction) by the gravitational force that acts on spring 44 and simulated object 20 and the driving force of motor 40a.

As can be seen from attachment example 3 shown in FIG. 13A, a plurality of springs 44 are provided between attachment portion 40b and simulated object 20. In attachment example 3 shown in FIG. 13A, two springs 44a and 44b are illustrated as the plurality of springs 44. Two springs 44a and 44b are coupled to each other, and one spring 44a is disposed in such a manner that the axial direction of the rotary shaft of motor 40a is substantially parallel to the lengthwise direction of one spring 44a. Furthermore, attachment portion 40b is attached to one end of one spring 44a. Meanwhile, one end of other spring 44b is attached to the other end of one spring 44a in such a manner that the one end of other spring 44b intersects with the lengthwise direction of one spring 44a. Meanwhile, simulated object 20 is disposed in such a manner that the lengthwise direction of simulated object 20 is substantially parallel to the lengthwise direction of other spring 44b. Furthermore, simulated object 20 is attached to the other end of other spring 44b. Therefore, simulated object 20 can fluctuate in three-dimensional directions mainly in the direction of rotation, in the direction of the gravitational force (the vertical direction), and in the front and rear direction by the gravitational force that acts on spring 44 and simulated object 20 and the driving force of motor 40a.

Now, movements of spring 44 and of simulated object 20 according to attachment example 1 will be described with reference to FIG. 13B. FIG. 13B is a diagram showing movements of spring 44 and of simulated object 20 observed when the rotary shaft of motor 40a makes only a single clockwise rotation and then stops, in a configuration in which spring 44 is disposed between simulated object 20 and driving device 40 of the filter apparatus according to Variation 6 of the embodiment.

In FIG. 13B, a to c show an example of movements of spring 44 and of simulated object 20 observed when the rotary shaft of motor 40a makes a single clockwise rotation and then stops. In a to c of FIG. 13B, spring 44 and simulated object 20 fluctuate clockwise by the rotation of the rotary shaft of motor 40a. At this point, as seen under c of FIG. 13B, simulated object 20 gently fluctuates clockwise with a temporal delay from the rotation of spring 44 so as to follow the rotation of spring 44.

Next, as seen under d of FIG. 13B, when motor 40a stops being driven, spring 44 and simulated object 20 fluctuate clockwise further than they have fluctuated as seen under c of FIG. 13B, and simulated object 20 gently fluctuates clockwise with a temporal delay from the rotation of spring 44 so as to follows the rotation of spring 44. Thereafter, as seen under e to h of FIG. 13B, spring 44 and simulated object 20 fluctuate counterclockwise. At this time as well, simulated object 20 gently fluctuates counterclockwise with a temporal delay from the rotation of spring 44 so as to follow the rotation of spring 44. Still thereafter, as seen under i to j of FIG. 13B, spring 44 and simulated object 20 fluctuate clockwise.

In this manner, spring 44 and simulated object 20 fluctuate, though less and less vigorously, even after motor 40a stops being driven and eventually stop moving. Therefore, a natural fluctuation of simulated object 20 can be reproduced by driving motor 40a only slightly.

Meanwhile, the plurality of simulated objects 20 may be coupled to each other and may, as a unit, be attached to one attachment portion 40b. In this case, driving device 40 can move the plurality of simulated objects 20 integrally.

Meanwhile, the plurality of simulated objects 20 may be provided separately from each other. In this case, driving device 40 includes a plurality of motors 40a and a plurality of attachment portions 40b so that the plurality of motors 40a and the plurality of attachment portions 40b correspond one-to-one to the plurality of simulated objects 20. In other words, the plurality of simulated objects 20 are attached, in one-to-one correspondence, to the plurality of attachment portions 40b of respective motors 40a. With this configuration, the plurality of simulated objects 20 can be moved independently of each other.

Filter apparatus 1f according to the present variation configured as described above includes a plurality of simulated objects 20. Then, each of the plurality of simulated objects 20 is moved by driving device 40 to fluctuate, to rotate, to deform, or to stretch and contract independently of each other.

According to this configuration, a variety of fluctuation states close to those observed in nature can be reproduced by providing a projection image close to a bioshadow with a fluctuation of natural light filtering through tree leaves or natural light reflected on a water surface.

In filter apparatus 1f according to the present variation configured as described above, driving device 40 directly moves simulated object 20 through an electromagnetic force and/or an electrostatic force.

According to this configuration, the displacement stroke of simulated object 20 can be increased with the use of power-saving, small-sized driving device 40, such as a small-sized motor, a small-sized electromagnet, a magnetic fluid, or an electrostatic actuator. Since typical driving device 40 can be used, the present disclosure can provide inexpensive, small-sized filter apparatus 1f.

Filter apparatus 1f according to the present variation configured as described above further includes an elastic member (spring 44) disposed between driving device 40 and simulated object 20.

According to this configuration, the driving force of driving device 40 is transmitted to simulated object 20 via spring 44. Therefore, when a pulsed driving force is applied to simulated object 20, simulated object 20 moves with a temporal delay from the driving of driving device 40, and thus simulated object 20 can move more gently than when simulated object 20 is driven directly by driving device 40. Furthermore, even after driving device 40 has stopped being driven, simulated object 20 can continue to fluctuate less and less vigorously by the relationship between the elasticity of spring 44 and the gravitational force that acts on simulated object 20. Therefore, this filter apparatus 1f can reproduce a natural fluctuation of simulated object 20.

Furthermore, depending on the material, the shape, the structure, and so on of spring 44, this filter apparatus 1f can not only cause simulated object 20 to fluctuate along a planar two-dimensional plane but also cause simulated object 20 to fluctuate in three-dimensional directions, and thus filter apparatus 1f can cause simulated object 20 to fluctuate more naturally.

Furthermore, as driving device 40 causes simulated object 20 to move only once, simulated object 20 can continue to fluctuate for an extended period of time because of spring 44. Therefore, with filter apparatus 1f, any increase in power consumption can be suppressed.

### [Variation 7 of Embodiment]

Filter apparatus 1g according to the present variation differs from the filter apparatus according to Variation 1 of the embodiment in that filter apparatus 1g includes fan 42. Of the configurations and the functions of filter apparatus 1g according to the present variation, configurations and functions that are identical to the configurations and the functions of the filter apparatus according to Variation 1 of the embodiment are given identical reference characters, and the detailed description of such configurations and functions will be omitted.

Filter apparatus 1g according to the present variation will be described with reference to FIG. 14 and FIG. 15.

FIG. 14 depicts a sectional view showing filter apparatus 1g and lighting apparatus 100 according to Variation 7 of the embodiment as well as a diagram showing a projection image. FIG. 15 depicts block diagrams showing filter apparatus 1g and lighting apparatus 100 according to Variation 7 of the embodiment.

As shown in FIG. 14 and FIG. 15, driving device 40 of filter apparatus 1g includes fan 42 that blows air to simulated object 20.

The number of rotations of the rotary wings of fan 42 is controlled as the driving of fan 42 is controlled by control circuit 41 of driving device 40. With this configuration, fan 42 can apply an intermittent force or a continuous force to simulated object 20. In other words, simulated object 20 fluctuates in an irregular manner by the wind blown by fan 42.

In filter apparatus 1g according to the present variation configured as described above, driving device 40 includes fan 42 that blows air to simulated object 20.

According to this configuration, fluctuation of light and shadow seen, for example, in natural light filtering through tree leaves or natural light reflected on a water surface as being representative of a bioshadow are produced by a natural wind, and thus a more reality-like projection image can be provided by a mechanism simulating a natural phenomenon.

### [Variation 8 of Embodiment]

Filter apparatus 1h according to the present variation differs from the filter apparatus according to the embodiment and so on in that filter apparatus 1h includes fan 42 and electromagnetic valve 43. Of the configurations and the functions of filter apparatus 1h according to the present variation, configurations and functions that are identical to the configurations and the functions of the filter apparatus according to the embodiment and so on are given identical reference characters, and the detailed description of such configurations and functions will be omitted.

Filter apparatus 1h according to the present variation will be described with reference to FIG. 16 to FIG. 18.

FIG. 16 is a schematic diagram showing filter apparatus 1h according to Variation 8 of the embodiment. FIG. 17 is a diagram showing a driving circuit of filter apparatus 1h according to Variation 8 of the embodiment. FIG. 18 depicts block diagrams showing filter apparatus 1h and lighting apparatus 100 according to Variation 8 of the embodiment.

As shown in FIG. 16 to FIG. 18, driving device 40 of filter apparatus 1h includes electromagnetic valve 43 and fan 42 that blows wind to simulated object 20. Driving device 40 includes a driving circuit that includes, for example, fan 42 and electromagnetic valve 43, as shown in FIG. 17. Herein, driving device 40 according to the present variation does not have to include more than one electromagnetic valve 43.

Housing 10 according to the present variation is a rectangular frame member. Housing 10 houses one or more fans 42 and one or more electromagnetic valves 43. In the example shown in FIG. 16, housing 10 houses a plurality of fans 42 and a plurality of electromagnetic valves 43.

As shown in FIG. 16 to FIG. 18, the number of rotations of the rotary wings of fan 42 is controlled as the driving of fan 42 is controlled by control circuit 41 of driving device 40. With this configuration, fan 42 can apply an intermittent force or a continuous force to simulated object 20. In other words, simulated object 20 fluctuates in an irregular manner by the wind blown by fan 42.

Housing 10 includes frame portion 15 and wall portion 16. Fans 42 and electromagnetic valves 43 are attached to frame portion 15. Wall portion 16 partitions housing 10 into first space 10a in which simulated object 20 is disposed and second space 10b in which one or more fans 42 and one or more electromagnetic valves 43 are disposed. In other words, wall portion 16 is disposed between first space 10a and second space 10b. Furthermore, although two second spaces 10b are formed in the example shown in FIG. 16, there may be only one second space 10b.

Through-hole 15a is formed in frame portion 15 so that fan 42 can bring the air into filter apparatus 1h from the outside. Therefore, fan 42 is disposed at a position where fan 42 opposes through-hole 15a.

One or more communication holes 16a are formed in wall portion 16, and one or more communication holes 16a allow communication between first space 10a and second space 10b. One or more electromagnetic valves 43 are disposed in second space 10b in such a manner that one or more electromagnetic valves 43 correspond one-to-one to one or more communication holes 16a.

One or more electromagnetic valves 43 are controlled by control circuit 41. Therefore, each of one or more electromagnetic valves 43 can open or close the corresponding one of one or more communication holes 16a. Specifically, when control circuit 41 supplies electricity to electromagnetic valve 43, valve body 43a of electromagnetic valve 43 is actuated by the electromagnetic force generated in coil 43c, and thus valve body 43a becomes separated from communication hole 16a. Communication hole 16a is released with this mechanism, and thus the wind generated by fan 42 disposed in second space 10b flows into first space 10a via released communication hole 16a, and this wind in turn causes simulated object 20 to fluctuate. Meanwhile, when control circuit 41 stops supplying electricity to electromagnetic valve 43, valve body 43a becomes pressed against communication hole 16a due to the biasing force of coil spring 43b of electromagnetic valve 43. Communication hole 16a is closed with this mechanism, and thus the wind generated by fan 42 disposed in second space 10b stops flowing into first space 10a via communication hole 16a. Herein, valve body 43a is constituted by a steel plate and an elastic member that is provided on the steel plate and makes tight contact with wall portion 16.

Control circuit 41 can control one or more electromagnetic valves 43 all together or can control one or more electromagnetic valves 43 independently of each other. In other words, control circuit 41 can open or close any desired communication hole 16a or communication holes 16a, as appropriate, among one or more communication holes 16a. Therefore, as control circuit 41 controls one or more electromagnetic valves 43 with the rhythm of 1/f fluctuation, which is a natural rhythm, simulated object 20 moves in such a manner that members forming simulated object 20 move with a temporal delay from each other. With this configuration, filter apparatus 1h according to the present variation can reproduce a variety of fluctuation states close to those observed in nature.

Although not depicted, according to the present variation, a power storage element may be provided in frame portion 15. The configuration and the arrangement of the power storage element are similar to those according to the other variations.

### [Variation 9 of Embodiment]

Filter apparatus 1i according to the present variation differs from the filter apparatus according to the embodiment and so on in that simulated object 20 is supported by linear member 70 in filter apparatus 1i. Of the configurations and the functions of filter apparatus 1i according to the present variation, configurations and functions that are identical to the configurations and the functions of the filter apparatus according to the embodiment and so on are given identical reference characters, and the detailed description of such configurations and functions will be omitted.

Filter apparatus 1i according to the present variation will be described with reference to FIG. 19.

FIG. 19 is a fragmentary sectional view showing filter apparatus 1i according to Variation 9 of the embodiment.

As shown in FIG. 19, filter apparatus 1i further includes one or more linear members 70.

One or more linear members 70 maintain the position and the orientation of simulated object 20 disposed inside housing 10. One or more linear members 70 are coupled at one end to housing 10 and coupled at the other end to simulated object 20.

Furthermore, linear member 70 is, for example but is not limited to, a string, a wire, or a rubber string. It is preferable that linear member 70 be transparent. Alternatively, linear member 70 may be colored in white, black, or any other colors. Linear member 70 may be an elastic member or a non-elastic member. According to the present variation, linear member 70 is a stretchable rubber string.

As simulated object 20 is supported by one or more linear members 70, the position and the orientation of simulated object 20 can be maintained against a possible change in the position and the orientation thereof that could occur when filter apparatus 1i is attached to, for example, a spotlight. In other words, as compared to a case in which simulated object 20 is not supported by one or more linear members 70, the change in the orientation of simulated object 20 is minimized.

Filter apparatus 1i according to the present variation configured as described above further includes one or more linear members 70 coupled to filter apparatus 1i. Then, even if the position and the orientation of filter apparatus 1i change when filter apparatus 1i is attached to the light source (lighting apparatus 100), simulated object 20 is supported by one or more linear members 70 so that the position and the orientation of simulated object 20 are maintained.

According to this configuration, at no matter what orientation filter apparatus 1i is attached to lighting apparatus 100, the orientation of simulated object 20 changes merely slightly, and thus the orientation of simulated object 20 can be maintained while the movement of simulated object 20 is not hindered. Therefore, this filter apparatus 1i can provide a good projection image on an illumination surface.

### [Variation 10 of Embodiment]

Filter apparatus 1j according to the present variation differs from the filter apparatus according to Variation 5 and so on of the embodiment in that simulated object 20 and/or driving device 40 can be attached to or detached from filter apparatus 1j. Of the configurations and the functions of filter apparatus 1j according to the present variation, configurations and functions that are identical to the configurations and the functions of the filter apparatus according to Variation 5 and so on of the embodiment are given identical reference characters, and the detailed description of such configurations and functions will be omitted.

FIG. 20 depicts a sectional view showing filter apparatus 1j and lighting apparatus 100 according to Variation 10 of the embodiment as well as a fragmentary sectional view, taken along the C-C line, showing housing 10, power generating element 52, simulated object 20, housing body 80, and so on of filter apparatus 1j.

As shown in FIG. 20, filter apparatus 1j according to the present variation further includes housing body 80.

Housing body 80 is a cylinder shaped member and is housed in housing 10. Housing body 80 houses simulated object 20 and/or driving device 40. Furthermore, housing body 80 can be attached to or detached from housing 10. In other words, simulated object 20 and/or driving device 40 can be attached to or detached from filter apparatus 1j.

Power source 50 may be housed inside housing body 80. Furthermore, power generating element 52 of power source 50 may be housed inside housing body 80. In a case in which power generating element 52 is a solar cell, with the front and rear direction of housing body 80 being regarded as an axis, one or more power generating elements 52 may be disposed along the circumferential direction on the inner peripheral surface of housing body 80. In other words, power generating elements 52 may be disposed in such a manner that puts the light receiving surface of power generating element 52 to be substantially parallel to the front and rear direction of housing body 80. Furthermore, power generating element 52 may be disposed in such a manner that puts the light receiving surface of power generating element 52 to be orthogonal to the optical axis of filter apparatus 1j and may be disposed to the front side or the rear side of first lens 31. Herein, the front and rear direction of housing body 80 is the same direction as the front and rear direction of housing 10.

Furthermore, only simulated object 20 inside housing body 80 or only driving device 40 inside housing body 80 may be replaceable. Furthermore, any of first lens 31, second lens 32, or filter plate 60 inside housing 10 may be configured to be replaceable. Therefore, first lens 31 and second lens 32 can be replaced by a lens with a different magnification, or filter plate 60 can be replaced by another filter plate with a different function.

Furthermore, the positions at which first lens 31 and second lens 32 are attached inside housing 10 can be changed. Therefore, the focal point of a projection image can be adjusted.

Although housing body 80 is illustrated as an example according to the present variation, filter apparatus 1j does not have to include housing body 80. In other words, simulated object 20 and driving device 40 do not need to be housed in housing body 80 and may simply be housed in housing 10.

In filter apparatus 1j according to the present variation configured as described above, simulated object 20 and/or driving device 40 can be attached to or detached from filter apparatus 1j.

According to this configuration, the bioshadow content can be changed with ease depending on the season or how a user is feeling, and thus the user can be saved from seeing the same projection image again and again. Therefore, this filter apparatus 1j can provide the user with a highly relaxing, refreshing effect that the user does not easily get accustomed to.

### [Variation 11 of Embodiment]

Filter apparatus 1k according to the present variation differs from the filter apparatus according to Variation 10 and so on of the embodiment in that filter apparatus 1k includes coupling mechanism 91. Of the configurations and the functions of filter apparatus 1k according to the present variation, configurations and functions that are identical to the configurations and the functions of the filter apparatus according to Variation 10 and so on of the embodiment are given identical reference characters, and the detailed description of such configurations and functions will be omitted.

Filter apparatus 1k according to the present variation will be described with reference to FIG. 21.

FIG. 21 is a schematic diagram showing filter apparatus 1k according to Variation 11 of the embodiment.

As shown in FIG. 21, filter apparatus 1k is coupled to lighting apparatus 100. Specifically, filter apparatus 1k further includes coupling mechanism 91 that can be coupled to lighting apparatus 100.

Coupling mechanism 91 is a fixing member, such as a screw or a fastener. For example, with lighting apparatus 100 and filter apparatus 1k connected to each other, a screw portion of coupling mechanism 91 is inserted into coupling hole 10h formed at the rear end of housing 10 to engage filter apparatus 1k with lighting apparatus 100, and thus filter apparatus 1k can be coupled to lighting apparatus 100 to thus be attached to lighting apparatus 100.

Furthermore, coupling mechanism 91 may be a coupling portion, such as an internal thread screw, formed in housing 10. For example, filter apparatus 1k may be able to be attached to or detached from lamp 100a of lighting apparatus 100 by coupling the coupling portion formed in housing 10 with the coupled portion (e.g., an external thread screw) formed in lamp 100a of lighting apparatus 100.

In filter apparatus 1k according to the present variation configured as described above, filter apparatus 1k further includes coupling mechanism 91 that can be coupled to the light source (lighting apparatus 100).

According to this configuration, filter apparatus 1k can be attached to or detached from, for example, an existing lighting apparatus with ease, and thus filter apparatus 1k and lighting apparatus 100 can easily and reliably be transformed into an image projecting apparatus.

### [Variation 12 of Embodiment]

Filter apparatus 1m according to the present variation differs from the filter apparatus according to the embodiment and so on in that filter apparatus 1m includes storage device 53. Of the configurations and the functions of filter apparatus 1m according to the present variation, configurations and functions that are identical to the configurations and the functions of the filter apparatus according to the embodiment and so on are given identical reference characters, and the detailed description of such configurations and functions will be omitted.

Filter apparatus 1m according to the present variation will be described with reference to FIG. 22.

FIG. 22 depicts block diagrams showing filter apparatus 1m and lighting apparatus 100 according to Variation 12 of the embodiment.

As shown in FIG. 22, filter apparatus 1m further includes storage device 53 and receiver 54.

Storage device 53 stores therein a control program that can cause simulated object 20 to be driven. Storage device 53 can update the control program stored therein by storing another control program that receiver 54 receives from external device 110. In this example, external device 110 is an operable terminal, such as a smartphone or a tablet terminal.

A control program is a program for control circuit 41 to control driving device 40. For example, a control program includes a timing chart indicating, for example, the magnitude of an intermittent force or a continuous force that driving device 40 applies to simulated object 20 as well as the temporal timing of applying such a force. One or more timing charts are stored in storage device 53.

Such a control program may be executed as the user operates external device 110. Furthermore, in a case in which an operator is provided in filter apparatus 1m, a control program may be executed as the user operates the operator.

Receiver 54 is a wireless communication module capable of communicating wirelessly with external device 110. Receiver 54 receives a control program from external device 110 and outputs the received control program to a storage.

Filter apparatus 1m according to the present variation configured as described above further includes storage device 53 that stores therein a control program that can cause simulated object 20 to be driven. Then, filter apparatus 1m can communicate wirelessly with external device 110 and can update the control program stored therein to another control program received from external device 110.

According to this configuration, even simulated object 20 remains the same, when the manner in which simulated object 20 is moved is changed (a moving method), the impression and the effect that a projection image has on the user changes a great deal, and thus filter apparatus 1m can provide the user with a highly relaxing, refreshing effect that the user does not easily get accustomed to.

### [Variation 13 of Embodiment]

Filter apparatus 1n according to the present variation differs from the filter apparatus according to the embodiment and so on in that filter apparatus 1n includes fall prevention mechanism 92. Of the configurations and the functions of filter apparatus 1n according to the present variation, configurations and functions that are identical to the configurations and the functions of the filter apparatus according to the embodiment and so on are given identical reference characters, and the detailed description of such configurations and functions will be omitted.

Filter apparatus 1n according to the present variation will be described with reference to FIG. 23 and so on.

FIG. 23 depicts schematic diagrams of states before and after fall prevention mechanism 92 of filter apparatus 1n according to Variation 13 of the embodiment is hooked to lighting apparatus 100.

As shown in FIG. 23, filter apparatus 1n includes one or more fall prevention mechanisms 92.

Fall prevention mechanism 92 is, for example but is not limited to, a cord or a coupling mechanism coupled to housing 10. In the example shown in FIG. 23, fall prevention mechanism 92 is a cord. For example, when filter apparatus 1n is to be coupled to lighting apparatus 100, filter apparatus 1n can be coupled to lighting apparatus 100 by additionally hooking fall prevention mechanism 92 onto lighting apparatus 100. Therefore, even if the fastening between filter apparatus 1n and lighting apparatus 100 becomes loose accidentally and filter apparatus 1n becomes disengaged from lighting apparatus 100, filter apparatus 1n can be kept from falling to, for example, the floor or the ground, as fall prevention mechanism 92 remains hooked on lighting apparatus 100.

In filter apparatus 1n according to the present variation configured as described above, filter apparatus 1n further includes one or more fall prevention mechanisms 92.

According to this configuration, when filter apparatus 1n is installed at an elevated place, even if filter apparatus 1n becomes disengaged from lighting apparatus 100 as the fastening between filter apparatus 1n and lighting apparatus 100 becomes loose, fall prevention mechanism 92 can keep filter apparatus 1n connected to lighting apparatus 100. With this configuration, filter apparatus 1n can be kept from falling to, for example, the floor or the ground, and thus filter apparatus 1n that is safe and secure can be provided reliably.

### [Variation 14 of Embodiment]

Filter apparatus 1p according to the present variation differs from the filter apparatus according to the embodiment and so on in that liquid 20c, one example of simulated object 20, is used in filter apparatus 1p. Of the configurations and the functions of filter apparatus 1p according to the present variation, configurations and functions that are identical to the configurations and the functions of the filter apparatus according to the embodiment and so on are given identical reference characters, and the detailed description of such configurations and functions will be omitted.

Filter apparatus 1p according to the present variation will be described with reference to FIG. 24 and FIG. 25.

FIG. 24 is a schematic diagram showing filter apparatus 1p according to Variation 14 of the embodiment as filter apparatus 1p is viewed from its front and from its side. FIG. 25 is a schematic diagram showing how light that lighting apparatus 100 according to Variation 14 of the embodiment emits is projected via filter apparatus 1p as a projection image on an illumination surface. FIG. 25 omits frame portion 10d of housing 10.

Liquid 20c according to the present embodiment is, for example but is not limited to, water or oil. Herein, liquid 20c is light transmissive and is transparent or semi-transparent. Liquid 20c may be colored.

As shown in FIG. 24 and FIG. 25, driving device 40 of filter apparatus 1p includes electromagnetic valve 43 that causes liquid 20c to vibrate.

Housing 10 according to the present variation is a rectangular frame member. Housing 10 houses one or more electromagnetic valves 43. In the example shown in FIG. 24, housing 10 houses a plurality of electromagnetic valves 43.

Housing 10 includes frame portion 10d that houses one or more electromagnetic valves 43 and container 10e that is housed inside frame portion 10d and that stores liquid 20c. While container 10e stores liquid 20c, there may be a space of a certain size over the surface of liquid 20c so that the surface of liquid 20c can be ruffled. Herein, container 10e is not completely filled with liquid 20c not to keep liquid 20c from overflowing out of container 10e.

One or more electromagnetic valves 43 are disposed in the space between frame portion 10d and container 10e and are attached to container 10e and/or frame portion 10d. In the example shown in FIG. 24, a plurality of electromagnetic valves 43 are disposed along a wall of container 10e. Furthermore, the plurality of electromagnetic valves 43 are disposed on two sides of container 10e.

Furthermore, the plurality of electromagnetic valves 43 are attached to the wall of container 10e in such a manner that the plurality of electromagnetic valves 43 can cause the surface of liquid 20c in container 10e to be ruffled. Specifically, the main body, such as coil 43c, of each of the plurality of electromagnetic valves 43 is disposed in such a manner that the main body is exposed through the wall surface of container 10e. Furthermore, valve body 43a and coil spring 43b of each of the plurality of electromagnetic valves 43 are disposed inside container 10e in such a manner that valve body 43a and coil spring 43b are completely or partially submerged in liquid 20c within container 10e.

One or more electromagnetic valves 43 are controlled by control circuit 41. Therefore, each valve body 43a of one or more electromagnetic valve 43 can move within liquid 20c. Specifically, when control circuit 41 supplies electricity to electromagnetic valve 43, valve body 43a of electromagnetic valve 43 is actuated by the electromagnetic force generated in coil 43c, and thus valve body 43a approaches the wall of container 10e. Meanwhile, when control circuit 41 stops supplying electricity to electromagnetic valve 43, valve body 43a moves away from the wall of container 10e due to the biasing force of coil spring 43b of electromagnetic valve 43. In other words, liquid 20c can be made to move as valve body 43a moves, and thus the surface of liquid 20c can be ruffled.

Control circuit 41 can control one or more electromagnetic valves 43 all together or can control one or more electromagnetic valves 43 independently of each other. Therefore, as control circuit 41 controls one or more electromagnetic valves 43 with the rhythm of 1/f fluctuation, which is a natural rhythm, the surface of liquid 20c can be moved with a temporal delay therein. With this configuration, filter apparatus 1p according to the present variation can reproduce a variety of fluctuation states close to those observed in nature.

Although driving device 40 includes electromagnetic valve 43 in the example illustrated according to the present variation, driving device 40 may include a fan that causes liquid 20c to vibrate. In other words, the surface of liquid 20c may be ruffled by the fan blowing wind to the surface of liquid 20c. Meanwhile, as described above, the driving of the fan may be controlled by control circuit 41.

Although not depicted, according to the present variation, a power storage element may be provided inside housing 10. The configuration and the arrangement of the power storage element are similar to those according to the other variations.

### [Variation 15 of Embodiment]

Filter apparatus 1q according to the present variation differs from the filter apparatus according to Variation 14 of the embodiment in that gel 20d, one example of simulated object 20, is used in filter apparatus 1q. Of the configurations and the functions of filter apparatus 1q according to the present variation, configurations and functions that are identical to the configurations and the functions of the filter apparatus according to Variation 14 of the embodiment are given identical reference characters, and the detailed description of such configurations and functions will be omitted.

Filter apparatus 1q according to the present variation will be described with reference to FIG. 26 and FIG. 27.

FIG. 26 is a schematic diagram showing filter apparatus 1q according to Variation 15 of the embodiment as filter apparatus 1q is viewed from its front and from its side. FIG. 27 is a schematic diagram showing how light that lighting apparatus 100 according to Variation 15 of the embodiment emits is projected via filter apparatus 1q as a projection image on an illumination surface.

As shown in FIG. 26 and FIG. 27, a plurality of separate air bubbles are formed inside gel 20d according to the present variation. The surface of gel 20d is always uneven. Gel 20d is light transmissive and is transparent or semi-transparent. Gel 20d may be colored.

As driving device 40 controls the driving of electromagnetic valve 43, the valve body inside gel 20d moves away from the wall of the container or moves toward the wall of the container. In this manner, since gel 20d can be made to move as the valve body moves, the surface of gel 20d can be ruffled.

Although not depicted, according to the present variation, a power storage element may be provided inside housing 10. The configuration and the arrangement of the power storage element are similar to those according to the other variations.

### [Variation 16 of Embodiment]

Filter apparatus 1r according to the present variation differs from the filter apparatus according to the embodiment and so on in that filter apparatus 1r projects a projection image reflected by simulated object 20 onto an illumination surface. Of the configurations and the functions of filter apparatus 1r according to the present variation, configurations and functions that are identical to the configurations and the functions of the filter apparatus according to the embodiment and so on are given identical reference characters, and the detailed description of such configurations and functions will be omitted.

Filter apparatus 1r according to the present variation will be described with reference to FIG. 28 and so on.

FIG. 28 is a sectional view showing filter apparatus 1r and lighting apparatus 100 according to Variation 16 of the embodiment.

As shown in FIG. 28, the optical path passing inside housing 10x according to the present variation is bent. In other words, the opening plane of inlet 11 of housing 10x through which light enters housing 10x is not parallel to the opening plane of outlet 12 of housing 10x through which light exits housing 10x.

At least simulated object 20, first lens 31, and driving device 40 are housed inside housing 10x. In the example shown in FIG. 28, housing 10x houses simulated object 20, first lens 31, second lens 32, filter plate 60, driving device 40, power storage element 51, and power generating element 52.

Simulated object 20 according to the present variation is a planar body. This simulated object 20 is constituted by base 21 and elastic member 22 placed on base 21. Base 21 is a stage that supports elastic member 22. Base 21 may be transparent or semi-transparent or may be colored in, for example, white, black, or a primary color. Elastic member 22 is a film or a sheet. Elastic member 22 may be transparent or semi-transparent or may be colored in, for example, white, black, or a primary color. Elastic member 22 does not have to be a single-ply member and may be a multilayer member composed of a plurality of elastic members 22.

Simulated object 20 is placed on the inner peripheral surface of housing 10x in such a manner that base 21 is attached to housing 10x or driving device 40 and the surface of elastic member 22 opposes inlet 11 or outlet 12. Therefore, simulated object 20 is disposed inside housing 10x in such s manner that the light that has entered housing 10x via inlet 11 can be reflected toward outlet 12.

Driving device 40 can cause elastic member 22 to stretch or contract. With this configuration, as shown in FIG. 29, elastic member 22 deforms to produce an uneven surface thereon, and thus the size of the gap between base 21 and elastic member 22 changes. At this point, when lighting apparatus 100 illuminates filter apparatus 1r with light, an interference pattern appears in the projection image reflected by simulated object 20 and projected onto the illumination surface. When elastic member 22 is repeatedly caused to stretch or contact (pulled or released), fluctuating light reflected on a water surface can be reproduced simulatively. Herein, FIG. 29 is a sectional view showing simulated object 20 of filter apparatus 1r according to Variation 16 of the embodiment.

Although an air layer is formed between base 21 and elastic member 22 according to the present variation, a gel or a liquid may be placed between base 21 and elastic member 22.

Furthermore, power generating element 52 is disposed in housing 10x in such a manner that makes the light receiving surface of power generating element 52 intersect with the optical axis of second lens 32 and oppose second lens 32.

### [Other Variations]

Thus far, filter apparatuses according to the present disclosure have been described based on the foregoing embodiment and Variations 1 to 16 of the embodiment. The embodiment and Variations 1 to 16 of the embodiment, however, do not limit the present disclosure. Unless departing from the spirit of the present disclosure, an embodiment obtained by making various modifications that a person skilled in the art can conceive of to the embodiment and Variations 1 to 16 of the embodiment may also be encompassed by the scope of the present disclosure.

For example, the filter apparatuses according to the foregoing embodiment and Variations 1 to 16 of the embodiment may form an illumination system together with a lighting apparatus.

Furthermore, the filter apparatuses according to the foregoing embodiment and Variations 1 to 16 of the embodiment may be a lighting apparatus that is non-removably and integrally embedded in a lamp.

Furthermore, filter apparatus 1s according to the foregoing embodiment and Variations 1 to 16 of the embodiment may include a plurality of driving devices 40 that move a plurality of simulated objects 20 independently of each other, as shown in FIG. 30. FIG. 30 depicts a sectional view showing filter apparatus 1s and lighting apparatus 100 according to another variation as well as a diagram showing a projection image. In the example shown in FIG. 30, filter apparatus 1s includes three simulated objects 20 and three driving devices 40. The plurality of simulated objects 20 may be disposed along the front and rear direction inside housing 10. As a control circuit controls the driving of the plurality of driving devices 40 independently of each other, the plurality of simulated objects 20 may be able to be moved independently of each other. In this case, when the focal point of the light that lighting apparatus 100 emits is made to lie on center simulated object 20 among the plurality of simulated objects 20, projection images of simulated objects 20 located in the front side and the rear side of center simulated object 20 tend to become lighter. Therefore, the present embodiment can provide a more reality-like projection image.

The control circuit partly constituting the filter apparatuses according to the foregoing embodiment and Variations 1 to 16 of the embodiment is typically implemented by a large scale integration (LSI) circuit, which is an integrated circuit. The control circuit may each be implemented by a single chip, or a part or the whole of the control circuit may be implemented by a single chip.

The technique for circuit integration is not limited to LSI, and an integrated circuit may be implemented by a dedicated circuit or a general purpose processor. A field programmable gate array (FPGA) that can be programmed after an LSI circuit is manufactured or a reconfigurable processor in which the connection or the setting of the circuit cell within an LSI circuit can be reconfigured may also be used.

In the foregoing embodiment and Variations 1 to 16 of the embodiment, the constituent elements may each be implemented by a dedicated piece of hardware or may each be implemented through the execution of a software program suitable for the corresponding constituent element. The constituent elements may each be implemented as a program executing unit, such as a CPU or a processor, reads out a software program recorded on a storage medium, such as a hard disk or a semiconductor memory, and executes the software program.

Furthermore, any numerals used above are for describing examples illustrating the present disclosure specifically, and the embodiment and Variations 1 to 16 of the embodiment according to the present disclosure are not limited by the illustrated numerals.

The divisions of the functional blocks in the block diagrams are merely examples. A plurality of functional blocks may be implemented as a single functional block, a single functional block may be divided into a plurality of functional blocks, or one or more of the functions may be transferred to another functional block. Furthermore, the functions of a plurality of functional blocks having similar functions may be processed in parallel or through time sharing by a single piece of hardware or software.

The order of executing the steps in each flowchart is for illustrating an example for describing the present disclosure specifically, and the order may differ from the ones described above. One or more of the steps may be executed simultaneously (in parallel) with another step.

It is to be noted that an embodiment obtained by making various modifications that a person skilled in the art can conceive of to the foregoing embodiment and Variations 1 to 16 of the embodiment or an embodiment achieved by combining, as desired, the constituent elements and the functions of the embodiment and Variations 1 to 16 of the embodiment within the scope that does not depart from the spirit of the present disclosure is also encompassed by the present disclosure.

### [Reference Signs List]

1, 1a, 1b, 1c, 1d, 1e, 1f, 1g, 1h, 1i, 1j, 1k, 1m, 1n, 1p, 1q, 1r, 1s filter apparatus
10, 10x housing
11 inlet
12 outlet
20 simulated object
20c liquid (simulated object)
20d gel (simulated object)
31, 31a, 31b first lens
32 second lens
40 driving device
41 control circuit
42 fan
44, 44a, 44b spring (elastic member)
50 power source
51 power storage element
52 power generating element
53 storage device
60 filter plate
70 linear member
91 coupling mechanism
92 fall prevention mechanism
100 lighting apparatus (light source)
110 external device

## Claims

1. A filter apparatus that transmits light emitted by a light source, the filter apparatus comprising:
a simulated object that receives the light emitted by the light source;
a driving device that mechanically moves the simulated object; and
a first lens that transmits the light emitted by the light source and having passed through the simulated object, wherein
the filter apparatus projects, onto an illumination surface, the light emitted by the light source and having passed through the simulated object and the first lens, the light forming an a projection image of fluctuation of light and shadow.

2. The filter apparatus according to claim 1, further comprising:
a power source that serves as a motive power source of the driving device.

3. The filter apparatus according to claim 2, wherein
the power source is capable of generating power from the light from the light source.

4. The filter apparatus according to any one of claims 1 to 3, wherein
the filter apparatus is attachable to and detachable from the light source.

5. The filter apparatus according to any one of claims 1 to 4, further comprising:
at least one filter plate disposed between an inlet of the filter apparatus via which the light from the light source enters the filter apparatus and an outlet of the filter apparatus through which the light from the light source exits the filter apparatus, the at least one filter plate having at least one of a function of changing the light emitted by the light source or a function of sealing an inside of the filter apparatus.

6. The filter apparatus according to any one of claims 1 to 5, further comprising:
a second lens of a convex lens shape disposed, within the filter apparatus, closer to a side that is to be attached to the light source, wherein
the simulated object is disposed between the first lens and the second lens.

7. The filter apparatus according to any one of claims 1 to 6, wherein
the simulated object is a three-dimensional body or a planar body obtained by one or more members being coupled to each other, and
the simulated object is moved by the driving device to fluctuate, to rotate, to deform, or to stretch and contract.

8. The filter apparatus according to any one of claims 1 to 7, wherein
the filter apparatus includes a plurality of simulated objects each of which is the simulated object, and
each of the plurality of simulated objects is moved by the driving device to fluctuate, to rotate, to deform, or to stretch and contract independently of each other.

9. The filter apparatus according to any one of claims 1 to 8, wherein
the simulated object includes a plurality of members,
each of the plurality of members included in the simulated object is of a different material, has a different thickness, and has a different weight, and
the driving device applies an intermittent force or a continuous force to the simulated object.

10. The filter apparatus according to any one of claims 1 to 9, wherein
the driving device moves the simulated object directly by at least one of an electromagnetic force or an electrostatic force.

11. The filter apparatus according to any one of claims 1 to 10, wherein
the driving device includes a fan that blows wind to the simulated object.

12. The filter apparatus according to any one of claims 1 to 11, wherein
the driving device includes a control circuit that controls a force that moves the simulated object, and
the control circuit controls a movement of the simulated object.

13. The filter apparatus according to claim 2 or 3, wherein
the power source includes a power storage element that stores electric energy generated.

14. The filter apparatus according to claim 2, 3 or 13, wherein
the power source includes a power generating element,
the power generating element is a solar cell, and
one or more power generating elements are disposed inside the filter apparatus, the one or more power generating elements each being the power generating element.

15. The filter apparatus according to claim 14, further comprising:
a housing that houses the simulated object, the first lens, and the power generating element, wherein
the power generating element is disposed within the housing at a position where the power generating element does not cast a shadow over the projection image on the illumination surface.

16. The filter apparatus according to any one of claims 1 to 15, wherein
the first lens is a convex lens,
the filter apparatus includes one or more first lenses each of which is the first lens, and
when a plurality of first lenses each of which is the first lens are provided, magnifications, a total number, and positions of the plurality of first lenses are set in accordance with a size of the light source, a size of the filter apparatus, a position of the simulated object, and a distance from the filter apparatus to the illumination surface.

17. The filter apparatus according to any one of claims 1 to 16, wherein
the first lens includes a convex lens, and
the first lens includes a plurality of sets of lenses each of which has a different sectional shape when cut along a plane orthogonal to an optical axis of the first lens.

18. The filter apparatus according to claim 6, wherein
at least one of the first lens or the second lens is made of resin.

19. The filter apparatus according to any one of claims 1 to 18, wherein
the projection image is an image of filtering through tree leaves or an image of light reflected on a water surface.

20. The filter apparatus according to any one of claims 1 to 19, wherein
the driving device moves the simulated object at 1/f fluctuation.

21. The filter apparatus according to any one of claims 1 to 20, wherein
a shade of the projection image is varied partially, temporally, or partially and temporally with use of a focal point effect of the first lens, a thickness of the simulated object, and a fluctuation of the simulated object relative to a traveling direction of light passing through the filter apparatus.

22. The filter apparatus according to any one of claims 1 to 21, wherein
at least one of the simulated object or the driving device is attachable to and detachable from the filter apparatus.

23. The filter apparatus according to any one of claims 1 to 22, further comprising:
a storage device that stores a control program capable of driving the simulated object, wherein
the filter apparatus is capable of communicating wirelessly with an external device, and updating the control program to another control program received from the external device.

24. The filter apparatus according to any one of claims 1 to 23, further comprising:
one or more fall prevention mechanisms.

25. The filter apparatus according to any one of claims 1 to 24, further comprising:
one or more linear members coupled to the filter apparatus, wherein
the simulated object is supported by the one or more linear members to cause a position and an orientation of the simulated object to be maintained even when a position and an orientation of the filter apparatus changes when the filter apparatus is attached to the light source.

26. The filter apparatus according to any one of claims 1 to 25, wherein
the simulated object has a light transmissive property, and is wholly or partly colored.

27. The filter apparatus according to any one of claims 1 to 26, further comprising:
a coupling mechanism capable of being coupled to the light source.

28. The filter apparatus according to any one of claims 1 to 27, further comprising:
an elastic member disposed between the driving device and the simulated object.
